(19) Europäisches Patentamt / European Patent Office / Office européen des brevets

(11) **EP 4 180 775 A1**

(12) **EUROPEAN PATENT APPLICATION**

(43) Date of publication:
**17.05.2023 Bulletin 2023/20**

(21) Application number: **21461606.2**

(22) Date of filing: **22.10.2021**

(51) International Patent Classification (IPC):
***G01D 5/353*** (2006.01)  ***G01L 1/24*** (2006.01)
***G01L 11/02*** (2006.01)

(52) Cooperative Patent Classification (CPC):
**G01L 1/242; G01D 5/3538; G01L 11/025**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Inphotech Spolka Z ograniczona Odpowiedzialnoscia**
**05-850 Oltarzew (PL)**

(72) Inventors:
• **Szostkiewicz, Lukasz**
  **05-850 Oltarzew (PL)**

• **Kaczorowski, Jakub**
  **05-850 Oltarzew (PL)**
• **Poplawski, Janusz**
  **05-850 Oltarzew (PL)**
• **Markiewicz, Krzysztof**
  **05-850 Oltarzew (PL)**
• **Dominguez Lopez, Alejandro**
  **05-850 Oltarzew (PL)**
• **Napierala, Marek**
  **05-850 Oltarzew (PL)**
• **Nasilowski, Tomasz**
  **05-850 Oltarzew (PL)**

(74) Representative: **Bury & Bury**
  **Ul. Przyczolkowa 124**
  **02-968 Warszawa (PL)**

(54) **METHOD OF MEASURING A PARAMETER AND OPTICAL MEASUREMENT SYSTEM**

(57) Method of measuring a parameter under test affecting intermodal spectral shift of measurement optical fiber, including an excitation of radiation from a radiation source having a saw-like modulated wavelength in two modes with initial frequency offset $\Delta f$ corresponding to intermodal spectral shift in reference conditions. The invention further concerns a system adapted to execute a method according to the invention.

Fig. 1

**Description**

**Field of the invention**

The invention concerns method of measuring a parameter under test of optical fiber and optical measurement system therefor.

**State of the art**

In state of the art, distributed system solutions that are used to measure temperature, strain, vibrations, radiations, magnetic field, or pressure, based on changes in effective refractive index or in optical distance are known. These systems are based on a COTDR, COTDR/PhiOTDR or an OFDR techniques. These solutions are based on single-mode solutions due to difficulties with detection of a signal from multimode optical fibers. Single-mode optical fibers have power limitations due to non-linear effects that increase along with increases of optical power propagated in an optical fiber.

A COTDR technique (*Coherent Optical Time Domain Reflectometry*) is also called fi-OTDR, phi-OTDR and $\varphi$-OTDR (*phase-sensitive Optical Time Domain Reflectometry*) or wavelength scanning coherent optical time domain reflectometry. All of these names refer to a single architecture of a measurement device in which a phase measurement is based on sending coherent pulses and particular analysis of a signal that is reflected back in a time domain. The name COTDR emphasizes coherent nature of a measurement signal. The name of $\varphi$-OTDR draws attention to a possibility of performing a quantitative measurement of phase changes in an optical fiber. Both of these terms are used interchangeably - e.g. in the article "Coherent Rayleigh time domain reflectometry: novel applications for optical fibre sensing," Xin LU, EPFL 2016, https://infoscience.epfl.ch/record/221427.

Frequency shift of back-reflection spectra is key parameter to measure in Brillouin optical time-domain analysis in distributed sensors due to its proportionality to the local refractive index change (i. e. to the local temperature, pressure, and strain variations). A common method to retrieve frequency shift is to cross-correlate, at each position along the fiber, local spectral response of the fiber under test. Other recognized possibilities of estimating frequency shift include using least mean square similarity e. g. as disclosed in article: Li, Zhang, et al. "Analysis and Reduction of Large Errors in Rayleigh-based Distributed Sensor" J. Light. Technol. 37, 4710-4719, or artificial neural networks e. g. as disclosed in article: Liehr, Sascha, et al. "Real-time dynamic strain sensing in optical fibers using artificial neural networks" Optics Express 27(2019): 7405-7425.

In order to determine an effective refractive index, an optical distance as a function of physical length along an optical fiber Optical Frequency Domain Reflectometry is also used in the state of the art, when analyzing signals reflected or scattered along the optical fibre: Ding, Zhenyang, et al. "Distributed Optical Fibre Sensors Based on Optical Frequency Domain Reflectometry: A review." Sensors (Basel, Switzerland) 18 (2018): 104-127.

Using a processing unit, the COTDR measuring technique for measuring changes in an optical distance and converting them into temperature changes is implemented as described in Y. Koyamada, M. Imahama, K. Kubota, and K. Hogari, "Fiber-Optic Distributed Strain and Temperature Sensing with Very High Measurand Resolution Over Long Range Using Coherent OTDR," J. Light. Technol. 27, 1142-1146.

An optical time domain reflectometry analysis performed on signals, being a result of a detection of a radiation backscattered in a measurement optical fiber that has a saw-like modulated wavelength is commonly called chirped pulsed optical time domain reflectometry and abbreviated to CHIRP-OTDR. It is well described in the state of the art. e.g., Fernández-Ruiz, Maria R. & Costa, Luis & Martins, Hugo. (2019), Marcon, Leonardo & Soto, Marcelo & Soriano-Amat, Miguel & Costa, Luis & Fernández-Ruiz, Maria R. & Martins, Hugo & Palmieri, Luca & Gonzalez-Herraez, Miguel. (2020). High-Resolution Chirped-Pulse $\varphi$-OTDR by Means of Sub-Bands Processing. Journal of Lightwave Technology. PP. 1-1. 10.1109/JLT.2020.2981741., Marcon, Leonardo & Soto, Marcelo & Soriano-Amat, Miguel & Costa, Luis & Martins, Hugo & Palmieri, Luca & Gonzalez-Herraez, Miguel. (2019). Boosting the spatial resolution in chirped pulse $\phi$-OTDR using sub-band processing. 37. 10.1117/12.2539794, R. Fernández-Ruiz, M.; Costa, L.; F. Martins, H. Distributed Acoustic Sensing Using Chirped-Pulse Phase-Sensitive OTDR Technology. Sensors 2019, 19, 4368. 10.3390/s19204368. CHIRP-OTDR provides a possibility of a dynamic measurement along an optical fiber in a single measurement sweep. Conventional COTDR measurements would require numerous repetitions to obtain the same effect. Another example of CHIRP-OTDR based sensing system is disclosed in WO2017093588.

In the most general case, modes propagating in multimode and multicore optical fibers can be divided by order (eigenfunction number), polarization (understood as a point on a Poincare sphere), and the core number to which a given mode is related. In multimode optical fibers, various modes can be used for transmission or various measurements. Modes used for measurements are referred to as measurement mode in a sense that radiation used for measurement propagates in a given (measurement) mode.

For optical fibers with perfect symmetry, no distinction is made between polarization modes because they have the same effective refractive index.

Due to the number of wave functions available in the wavelength operating range, a distinction is made between single-mode and multimode optical fiber types. Only LP01 modes can propagate in single-mode optical fibers. Multimode optical fibers can also propagate LP11 and possibly higher modes.

In a single-mode optical fiber with perfect circular symmetry, the fundamental LP01 mode is degenerated and consists of two perpendicularly polarized modes. In an optical fiber with perfect circular symmetry, polarized modes have the same effective refractive index and the same cut-off wavelength. Actual optical fibers do not have a perfect circular symmetry (e.g., due to fluctuations in refractive index distribution or external disturbances), which is why polarization modes do not propagate with the same velocity. The measure of optical fiber birefringence is the difference in the effective refractive indices of polarization modes.

Optical fibers with a structure that forces the differentiation of effective refractive indices of polarization modes is called a polarization-maintaining optical fiber (e.g., PANDA or BOW-TIE optical fibers).

In multicore optical fibers, each core can propagate LP01 modes with different polarization. If a multicore optical fiber is also a multimode optical fiber, it means that the LP11 mode can propagate in at least one of its cores.

As modes propagates with different velocities being a result of differences in effective permittivity (or equivalently different propagation constants or different effective refractive index) it is possible to observe spectral shift between them.

Intermodal spectral shift is a difference in frequency that would be required to guarantee two different modes to propagate with the same velocity in an optical fiber. In experiment the intermodal spectral shift can be determined as a value of a laser offset frequency that must be applied between frequencies of a signal induced into the first mode and the second mode so back-reflected signals from both modes correlates with a 0 spectral shift.

Spectral shift between a pair of polarization modes is called birefringence. Spectral shift between modes in some of the optical fibers is itself sensitive to parameters such as pressure, temperature, strain, vibrations, or others. Publication of European patent application EP3194923A1 discloses a method of using phase sensitive OTDR for sensing temperature, strain and pressure based on local birefringence changes.

CHIRP-OTDR is not very well suited to measure intermodal spectral shift e.g., birefringence changes as comparison of components of radiation of slow axis and fast axis would require extreme high broadband detectors and radiation sources with impossible tuning range of wavelength. For most applications neither such detectors nor radiation sources are currently available and therefore CHIRP-OTDR is well recognized as not applicable for birefringence measurements unless it is very small - Luis Costa, Regina Magalhães, Luca Palmieri, Hugo Martins, Sonia Martin-Lopez, Maria R. Fernández-Ruiz, and Miguel Gonzalez-Herraez, "Fast and direct measurement of the linear birefringence profile in standard single-mode optical fibers," Opt. Lett. 45, 623-626 (2020). Unfortunately, optical fibers best suited to sensing certain parameters e.g., pressure tend to have rather significant birefringence. Additionally, if birefringence is low, fast, and slow components have limited separation which contributes to limited distance range and precision of the measurement.

Birefringent optical fibers have a fast axis and a slow axis. At a given frequency, radiation polarized along the fast axis have higher phase velocity than radiation polarized along the slow axis. Birefringence is a parameter reflecting birefringent properties of an optical fiber. There are many definitions of birefringence. In the following description, a birefringence is understood as a difference of frequencies of radiation components polarized along the fast axis and the slow axis $B = (f_f - f_s)$ that is required for both radiation components to have the same propagation constant $\beta_f = \beta_s$.

## Problem to be solved

It is difficult to provide a relatively simple measurement technique that would be applicable for measurement of parameters based on their impact on the intermodal spectral shift such as birefringence. Absolute value of intermodal spectral shift in applicable fibers often exceeds measurement ranges of CHIRP-OTDR analysis used with available equipment.

## Summary of the invention

Method of measuring a parameter under test affecting an intermodal spectral shift of an optical fiber, which includes feeding a radiation from a radiation source to a measurement optical fiber that is suitable to guide a first measurement mode and a second measurement mode. The radiation propagating in the measurement optical fiber is comprised of a first mode radiation component propagating in the first measurement mode, and a second mode radiation component propagating in the second measurement mode. The radiation fed in the measurement optical fiber has a saw-like modulated wavelength. The measurement includes an analysis of a first result of detection of the first mode radiation component received from the measurement optical fiber and a second result of detection of the second mode radiation component received from the measurement optical fiber, in order to determine an intermodal spectral shift B(x) and use it to determine a parameter under test. The radiation is fed into the measurement optical fiber in repeated pulses. The analysis is a chirped pulsed optical time domain reflectometry which includes analysis of the intermodal spectral shift $B(x)$ as a function of a position $x$ along the measurement optical fiber by determining a frequency shift $\Delta f_{meas}$ between the first result of detection and the second result of detection. The first mode radiation component is excited so that it has a frequency that is higher by a value of a frequency offset $\Delta f$ than a frequency of the second mode radiation component and the value of the frequency offset $\Delta f$ corresponds to a predefined model value of the intermodal spectral shift $B_{model}$ of the measurement optical fiber. Intermodal spectral shift between modes in sensing fibers usually has absolute value that is too high to be conveniently measured with available measurement optical systems. Direct measurement would require either rare and difficult to make or even nonexistent laser source and very fast/broadband acquisition unit. However, changes in intermodal spectral shifts are considerably smaller than absolute value in wide range of measured parameters. According to the invention known initial frequency offset $\Delta f$ causes pre-compensation of absolute value of intermodal spectral shift and allows to determine it as a sum of frequency offset $\Delta f$ and considerably smaller component $\delta f(x)$: $B(x) = \Delta f + \delta f(x)$.

Advantageously the measurement optical fiber is a birefringent measurement optical fiber which has a fast axis and a slow axis. The first mode radiation component is a fast radiation component being a component of the radiation polarized along the fast axis of the birefringent measurement optical fiber and the second mode radiation component is a slow radiation component being a component of the radiation polarized along the slow axis of the birefringent measurement optical fiber. Birefringence is an example of an intermodal spectral shift. The value of the frequency offset $\Delta f$ corresponds to a predefined model value of the birefringence $B_{model}$ of the birefringent measurement optical fiber. If the model value of the birefringence $B_{model}$ is equal to a actual value of the birefringence under reference (e.g., normal) conditions then once the frequency offset is applied the fast axis component has a frequency $f_f$ higher than a frequency $f_s$ of the slow axis component and the frequencies are in the same proportion as phase velocities, $v_f, v_s$ of the components:

$$\frac{f_f}{f_s} \simeq \frac{v_f}{v_s}$$

. Accordingly, the frequency shift between the fast and the slow components is considerably smaller than an actual value of the birefringence and can be measured with CHIRP-OTDR using lasers and detectors having typical available parameters.

Advantageously, at least a third measurement mode is applied to measure a first $B_1(x)$ and second $B_2(x)$ intermodal spectral shift in the measurement optical fiber to formulate system of equation allowing to deconvolute parameter under test from more than one parameter affecting intermodal spectral shift. That approach allows to formulate additional equation and to determine or eliminate additional parameter affecting the measurement. A typical pair of parameters changing simultaneously especially in a shaft is pressure and temperature. It is possible to use additional spatial mode or modes or even apply specialized measurement optical fibers designed to have applicable modes. Particularly advantageous example is dual core fiber having both cores birefringent. In such example four measurement modes are used (2 cores × 2 polarization) but with proper design one frequency can be used in common for both cores and therefore only two frequency offsets. Spatial modes can be fed subsequently with optical fiber switch or simultaneously via selective mode excitation system. Core modes can be fed with core addressing device.

Advantageously, the frequency shift is determined with a cross-correlation function which is reliable efficient and easy implement.

Advantageously, a length of the measurement optical fiber is divided into at least two sections and for separate single measurements, that correspond to different sections, different values of the model value of the intermodal spectral shift $B_{model}$ are applied. That approach allows for extension of measurement range, however on cost of multiple measurements. Yet, if measurement optical fiber has constant properties along its length, still no reference measurement is required.

Advantageously, frequency offset $\Delta f$ is selected so that a minimal difference between the first mode radiation component and the second mode radiation component in a single measurement along the single segment of the measurement optical fiber is lower than 500 MHz. It is a value that is enough to make it possible to measure with a system set up with relatively easily accessible components. It is stressed that measurements can be discriminated along the optical fiber. Accordingly measurements can be realized with different frequency offsets set for particular segments i.e. ranges of length on measurement optical fiber. This is particularly suited for shafts where certain parameters tend to change monotonically with depth. If for certain segments of measurement optical fiber difference of frequencies is too high they are not used for measurement with this particular value of $\Delta f$.

Advantageously, the frequency offset $\Delta f$ is selected so that a minimal difference between the first mode component and the second mode radiation component in the single measurement along the segment of the measurement optical fiber was lower than 100 MHz.

Advantageously, frequency offset $\Delta f$ is selected that a minimal difference between the first mode radiation component and the second mode radiation component in the single measurement along the segment of the measurement optical fiber was lower than 5 MHz.

Advantageously, the excitation of the radiation in the measurement optical fiber comprises an amplitude modulation of the radiation from the radiation source which has the saw-like modulated wavelength, with a harmonic modulating signal having the frequency equal to half of the frequency offset $\Delta f$ and a frequency filtering device (**822**) is configured to feed an upper sideband of the amplitude modulated radiation as the first mode radiation component and to feed a lower sideband of the amplitude modulated radiation as the second mode radiation component.

Optical measurement system including at least one radiation source with a saw-like modulated wavelength and a radiation feeding subsystem configured to feed a radiation from at least one radiation source into a measurement optical fiber, suitable to guide a first measurement mode and a second measurement mode, wherein the measurement optical fiber has an intermodal spectral shift between the first measurement mode and the second measurement mode which is susceptible to changes of a parameter under test. An acquisition subsystem configured for receiving Rayleigh backscattered signals from the measurement optical fiber: a first mode radiation component propagating in first measurement mode, and a second mode radiation component propagating in the second measurement mode. A processing unit is adapted to process signals from the acquisition subsystem. At least one radiation source is adapted to generate the radiation in pulses. The measurement system has a spectrum shaping subsystem for forming radiation components including a first radiation component that has a first component frequency, and a second radiation component that has a second component frequency. Both the first and the second mode radiation components are pulsed and have the saw-like modulated wavelength. The frequency of the first mode radiation component is higher by a frequency offset $\Delta f$ than the frequency of the second mode radiation component. The radiation feeding subsystem is adapted for feeding the first mode radiation component to the measurement optical fiber, propagating in the first measurement mode, and the second mode radiation component to the measurement optical fiber, propagating in the second measurement mode.

Advantageously, the measurement optical fiber is a birefringent measurement optical fiber, having a fast axis and a slow axis suitable to guide the first measurement mode being fast measurement mode polarized along the fast axis and the second measurement mode being a slow measurement mode polarized along the slow axis. The acquisition subsystem is configured for receiving from the birefringent measurement optical fiber a backscattered radiation component being polarized along the fast axis of the birefringent measurement optical fiber and a backscattered radiation component polarized along the slow axis of the birefringent measurement optical fiber. The spectrum shaping subsystem is adapted to form a fast radiation component having a fast radiation component frequency, and a slow radiation component that has a slow radiation component frequency. The fast radiation component frequency is higher than the slow radiation component frequency by a frequency shift $\Delta f$ corresponding to a predefined model value of the birefringence. The radiation feeding subsystem is adapted for feeding the fast radiation component to the birefringent measurement optical fiber polarized along the fast axis, and for feeding the slow radiation component to the birefringent measurement optical fiber polarized along the slow axis.

Advantageously, the spectrum shaping subsystem comprises a harmonic signal generator and an amplitude optical modulator for generating of a first sideband corresponding to the fast radiation component and a second sideband corresponding to the slow radiation component. The amplitude optical modulator is driven with a harmonic signal from the harmonic signal generator and the radiation feeding subsystem comprises a frequency filtering device for splitting the first sideband and the second sideband into separate radiation components and feeding them to respective separate inputs of a polarization beam splitter for feeding the radiation for the measurement optical fiber. One of the radiation components is fed to the polarization beam splitter via a 90° polarization rotator. Then if a frequency of the harmonic signal generator is set at a value corresponding to 0.5 of $\boldsymbol{B_{model}}$ an initial frequency offset between fast radiation component and slow radiation component is equal to $B_{model}$. That difference is very stable and easy to control which contributes to the accuracy of measurement and calibration.

Advantageously, the measurement optical fiber is adapted to guide more than one spatial measurement mode. The radiation feeding subsystem has a selective mode excitation device adapted to feed the radiation provided on the input into the different spatial modes on the output. The radiation from the output of the selective mode excitation device is guided to the measurement optical fiber.
The spatial modes can be feed subsequently with an optical fiber switch or simultaneously via a selective mode excitation system. The core modes can be fed with a core addressing device.

Advantageously, the measurement optical fiber is a dual birefringent core measurement optical fiber with sensitivity of the birefringence to the parameter under test different between the first core and the second core. The spectrum shaping subsystem is adapted to generate a first, a second and a third mode radiation components so that a frequency of the first mode radiation component is higher than a frequency of the third mode radiation component by a frequency shift $\Delta f_{13}$ which corresponds to a predefined model value of the birefringence in the first core. The frequency of the third mode radiation component is higher than the frequency of the second mode radiation component by a frequency shift $\Delta f_{23}$ which corresponds to a predefined model value of the birefringence in the second core. The radiation feeding subsystem has a core addressing device adapted to feed the radiation provided on the input into different cores on output preserving polarization. The radiation feeding subsystem is adapted to feed the first and the third mode radiation components to the first core so that the first and the second mode radiation components are polarized orthogonally along the fast and the slow axis respectively, and feed the third and the second mode radiation components to the second core so that the third and the second mode radiation components are polarized orthogonally along the fast and the slow axis respectively.

Spatial modes can be fed subsequently with optical fiber switch or simultaneously via selective mode excitation system. Core modes can be fed with core addressing device.

A computer program product adapted to control optical measurement system according to the invention contains a set of instructions for a processing unit of the optical measurement system according to the invention, which cause execution of the method according to the invention.

The invention is particularly suited for measurements in the shafts where typical parameters under test are pressure and temperature - both tend to change mononically with shaft depth. However, the present invention can be used for measurement numerous other kinds of parameters under test including, vibrations, strain, radiations, magnetic field and other measurements based on changes in effective refractive index or in optical distance.

**Description of drawings**

The invention has been described below in detail, with reference to the following figures:

Fig. 1        showing block diagram of a system according to another embodiment of the invention;
Fig. 2        shows a measurement pulse represented as a function of intensity of radiation I(t) versus time t;
Fig. 3        shows changes of wavelength λ(t) of radiation source in time;
Fig. 4        shows changes of radiation wavelength $\lambda_{pulse}$(t) within measurement pulse;
Fig. 5        an exemplary fast signal (dashed) and an exemplary slow signal (dotted) represented as power vs. time;
Fig. 6        cross-correlation of the measurement and reference signal in time domain;
Fig. 7        cross-correlation of the frequency domain representations of measurement and reference signal;
Fig. 8        showing block diagram of a system according to an embodiment of the invention;
Fig. 9        showing block diagram of a system according to another embodiment of the invention using two spatial modes;
Fig. 10      showing block diagram of a system according to another embodiment of the invention using three spatial modes;
Fig. 11      showing block diagram of a system according to another embodiment of the invention using different polarization and core modes;
Fig. 12      showing block diagram of a system according to another embodiment of the invention using sequential feeding of modes.

**Embodiments of the invention**

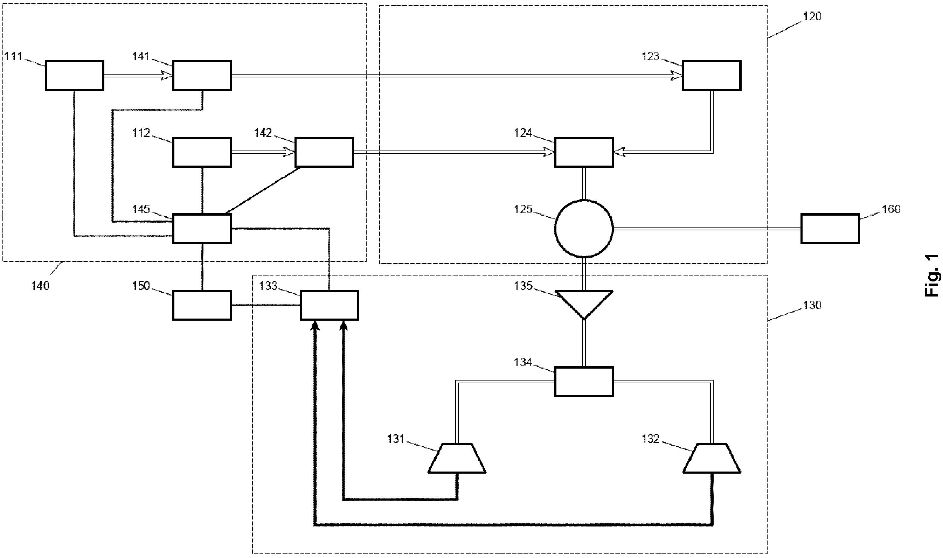

An embodiment of a method according to the invention is described below in greater detail. It can be implemented in a measurement setup presented in Fig. 1.

Pressure is a parameter under test. Numerous birefringent optical fibers sensitive to pressure can be applied but, in this example, a birefringent measurement optical fiber **160** is a side-hole optical fiber. Birefringence in this type of optical fibers is highly sensitive to pressure and much less sensitive to temperature.

Generally measurement optical fiber can be any fiber that allows guiding multiple modes. Modes propagating in multi-mode and multi-core optical fibres can be divided by: order propagation (eigenfunction number), polarization understood as a point on a Poincare sphere, and the core number to which a given mode is related. Therefore applicable measurement optical fiber allows guiding polarization modes, propagation modes, core modes or combination thereof. As long as there are measurement modes having an intermodal spectral shift that demonstrates dependence on parameter under test the fiber is applicable.

Let us consider a measurement along a shale gas well. Variations of temperature along depth of the shale gas well often reach 40 K. Temperature difference of 40 K, contributes to change of the birefringence of 240 MHz. On the other hand, such change corresponds to 1.5 bar. If acceptable uncertainty of a measurement is equal to 10 bar, then a compensation of the effect of temperature during pressure measurements is not required at all.

Sensitivity of the birefringence $\boldsymbol{B(x)}$ along the length of the x-axis of a birefringent measurement optical fiber **160** to pressure $\boldsymbol{p(x)}$ is equal to approximately $\frac{\partial B}{\partial p} = 159$ MHz/bar. Sensitivity of the birefringence $\boldsymbol{B(x)}$ of such side-hole optical fiber to temperature T(x) is equal to approximately $\frac{\partial B}{\partial T} = 6$ MHz/°K. Therefore, if accuracy of measurement is not essential then the impact of temperature on the birefringence can be neglected and following approximate relation between measured parameter $\boldsymbol{p_{meas}(x)}$ and change to birefringence $\Delta\boldsymbol{B(x)}$, where $\boldsymbol{x}$ denotes position along the measurement optical fiber:

$$p_{meas}(x) \simeq p_0 + \frac{\Delta B(x)}{159\frac{\text{MHz}}{\text{bar}}}$$

Change to birefringence $\Delta B(x)$ is understood as difference between current (measured) birefringence $B_{meas}(x)$ under value of pressure $p_{meas}(x)$ and value $B_0(x)$ measured in reference conditions under value of pressure $p_0$:

$$\Delta B_{meas}(x) = B_{meas}(x) - B_0(x)$$

The birefringence $B_{meas}(x)$ can be determined directly from a measured $\Delta f_{meas}(x)$ difference between frequency of fast component and slow component measured after introducing initial frequency shift $\Delta f$ equal to model value of birefringence $B_{model} = \Delta f$ according to the invention

$$B_{meas}(x) \simeq \Delta f_{meas}(x) + B_{model}$$

Accordingly:

$$\Delta B_{\text{meas}}(x) \simeq B_{\text{meas}}(x) - B_0(x) = \Delta f_{meas}(x) + B_{model} - B_0(x)$$

If measurement optical fiber has uniform properties ($B_0(x)$) model value of birefringence is equal to reference value $B_0(x) = const = B_{model}$. Accordingly, in certain applications in which high accuracy is not required and changes of temperature are limited, when measurement optical fiber has uniform parameters along its length it is possible to neglect impact of a temperature on a readout use a single value of $B_0(x) = const = B_{model} = \Delta f$ and use following approximation:

$$p_{meas}(x) \simeq p_0 + \frac{\Delta f_{\text{meas}}(x)}{159\frac{\text{MHz}}{\text{bar}}}$$

Abovementioned approximation allows to determine measured pressure $p_{meas}(x)$ at a distance x from beginning of an optical fiber. CHIRP-OTDR allows to measure change in birefringence $\Delta B_{meas}(x)$ as a function of x being the length along a birefringent measurement optical fiber **160.**

Above approximation works well if a model birefringence under normal pressure is constant along an optical fiber $B_0(x) = const = B_{model}$, then $\Delta B_{meas}(x) \simeq \Delta f_{meas}(x)$ can be obtained directly from a CHIRP-OTDR analysis and resulted $\Delta f_{meas}(x)$ as $B_{model}$ is compensated by frequency offset between a fast component and a slow component excited during the measurement $B_{model} = \Delta f = f_f$-$f_s$.

It should be noted that when CHIRP-OTDR analysis is used in a conventional way known in the art, including cross-correlation of measured signals with a reference copy of the signal, the analysis may deliver information about change of measured parameter but not absolute value of parameter if the change of parameter with respect to the reference value exceeds a range of measurement equipment. Naturally it is possible to continue consecutive measurements under control of computer program and cumulatively determine and store consecutive values of the measurement parameter(s) and this approach is used in the art. Yet, cumulative measurements result in cumulative error and require dense repetition. In some of applications it is inconvenient. It applies in particular to vertical shafts and under water measurements. During deployment of an optical fiber sensor, it is highly inconvenient to measure continually to acquire consecutive changes of pressure to keep track of absolute value. Furthermore, fast dynamic changes of parameters under test are very difficult to follow. If single changes are lost, then the whole process of consecutive updating measured value crashes. According to the present invention an absolute value of intermodal spectral shift such as birefringence is derivable from measured data and there is no need to gradually track changes of pressure to obtain measured value as sensor is deployed in its final destination.

Most straightforward, although not necessarily the best, method of obtaining constant difference in frequencies between a fast radiation component and a slow radiation component is to use two separate radiation sources operating in synchronized manner. In the measurement setup shown in Fig. 1 a first radiation source **111** is a chirp-laser with a pulse shaping module **141** adapted to generate pulses when triggered with signal from shift synchronization unit **145**. A second radiation source **112** is a chirp-laser with pulse shaping module **142** adapted to generate pulses when triggered with signal from shift synchronization unit **145**. The first radiation source **111** has higher frequency and is used to generate a fast radiation component and the second radiation source **112** is used to generate a slow radiation component. To maintain constant frequency shift and synchronized generation of pulses, a shift synchronization unit **145** is applied. Better accuracy can be obtained when the shift synchronization unit **145** comprises a reference laser. It is possible to use a third laser for synchronization. Frequency shift can be tuned with a control signal from a processing unit **150** to shift synchronization unit **145** to meet the value of an initial birefringence. Triggering signals from shift synchronization unit **145** are fed to pulse shaping modules **141, 142** as well as to data acquisition card **133**.

The output signal from the polarization beam splitter **124** comprises the fast radiation component having the fast component frequency originating from the first radiation source **111** and the slow radiation component having the slow component frequency originating from the second radiation source **112**. The fast and the slow radiation components have polarization rotated with respect to each other by 90° and are ready to be fed to the birefringent measurement optical fiber **160**.

The output signal from the polarization beam splitter **124** is fed to a first port of a circulator **125** and then it is transmitted via transmission of the circulator **125** to the second port of the circulator **125** to which the birefringent measurement optical fiber **160** is connected.

Backscattered signal from the birefringent measurement optical fiber **160** returns to the second port of the circulator **125** and is transmitted to the third port of the circulator **125** to feeding radiation to the acquisition subsystem **130**.

Splicing and optical fibers used in the system maintain polarization. The circulator **125** works with both polarization axis.

Signal backscattered from the birefringent measurement optical fiber is received with acquisition subsystem **130**. Fast and slow radiation components are first amplified with optical amplifier **135** and then separated with polarization beam splitter **134** to be directed to separate detectors **131, 132**. Results of detection are acquired with data acquisition card **133** which supplies it to processing unit **150**.

If the initial birefringence is not constant along the optical fiber, then additional calibration is required to obtain a reference birefringence function $B_0(x)$ corresponding to known conditions and determine a model birefringence $B_{model}$ and corresponding frequency shift $\Delta f = B_{model}$. Calibration may be simply, a measurement of the optical fiber under normal pressure (or any other reference value). During the measurement, different frequencies of the fast component and the slow component are applied. The frequency offset $\Delta f = (f_f - f_s)$ corresponds to an expected mean value of the birefringence $B_{model} = \overline{B_0(x)}$. The measurement results represent a deviation from the model birefringence along the length of a x-axis of the measurement optical fiber: $\delta_B(x) = B_0(x) - B_{model}$. Parameter $\delta_B(x)$ is a calibration factor and then the change of birefringence is effectively determined from a CHIRP-OTDR analysis as $\Delta B_{meas}(x) = \Delta f_{meas}(x) - \delta_B(x)$.

To simplify above explanation, it will be assumed that $B_{model}(x) = const = B_{model}$, however all considerations are directly transferable to an optical fiber, which does not meet this condition but is calibrated.

Accordingly, it is assumed that $\Delta B_{meas}(x) \simeq \Delta f_{meas}(x)$ is obtained by an analysis of results of detection of the fast radiation component and the slow radiation component received for a birefringent measurement optical fiber **160**.

Measurement of birefringence involves an excitation of radiation from the first radiation source **111** polarized along the fast axis of the birefringent measurement optical fiber **160** and an excitation of radiation from the second radiation source **112** polarized along the slow axis of the birefringent measurement optical fiber **160**.

Accordingly, radiation is excited so that it comprises fast radiation component polarized along fast axis, and slow radiation component of radiation polarized along slow axis.

According to the invention, in the birefringent measurement optical fiber **160,** the fast radiation component is excited so that it has a fast component frequency $f_f$ that is higher than the slow component frequency $f_s$ of the slow radiation component by a frequency offset Δf. The frequency offset being a difference Δf between frequency of the slow radiation component is selected so that it compensates a model value $B_{model}$ of birefringence: $f_f - f_s = \Delta f = B_{model}$. The Model value of birefringence may be a value of birefringence measured during calibration for a given conditions e.g., a normal condition, or a value taken from a technical specification for a given optical fiber. Alternatively, the conditions can correspond to initial prediction or assumption with respect to the measurement conditions.

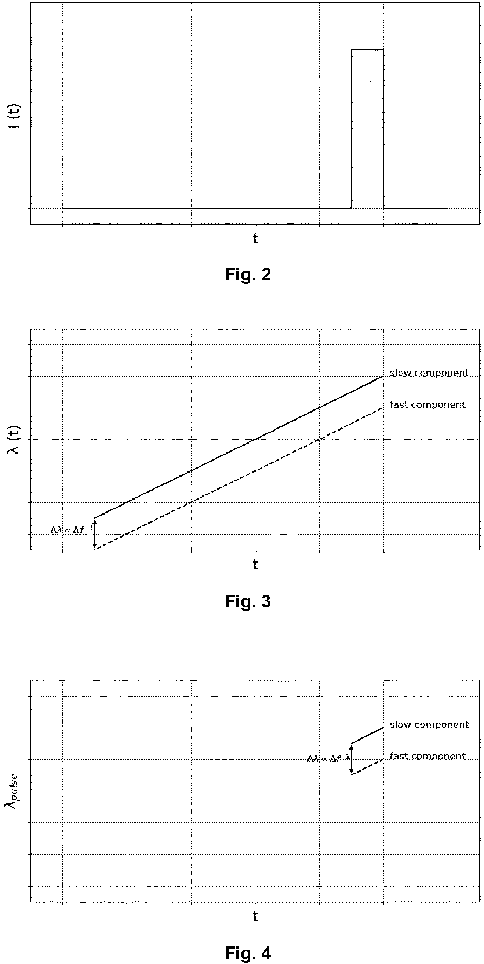

Both radiation sources **111, 112** apply radiation in pulses. Intensity of radiation in the pulse is schematically shown in Fig. 2. Also, both radiation sources are tuned with a monotonically, preferably a linear wavelength modulation, yet having frequencies shifted with respect to each other by a constant value of the frequency offset Δf. The relation between time and wavelengths of the first radiation source **111** and second radiation source **112** is shown in Fig. 3. As the signal is pulsed, an actual scope of change of wavelength of radiation components is smaller - it takes place just within duration of the pulse, as shown in Fig. 4.

The radiation of both the first radiation source **111** and the second radiation source **112** has a saw-like modulated wavelength. Saw-like shape is understood as ramp, sawtooth or triangular shape including nonlinear versions thereof. Signals with saw-like modulated wavelength are convenient for various methods of analysis enabling measurements along the length of x-axis of the birefringent measurement optical fiber **160**. In the present embodiments, the CHIRP-OTDR analysis was applied.

In a simple scenario, in parameters other than the one to measured have a negligible effect on the birefringent measurement optical fiber **160,** the measurement includes coherent optical time domain reflectometry analysis of

- a fast signal being a result of detection of the fast radiation component, received from the birefringent measurement optical fiber **160** and
- a slow signal being a result of detection of the slow radiation component, received from the birefringent measurement optical fiber **160.**

Both fast signal and slow signal are detected in measurement conditions in which the birefringent measurement optical fiber **160** is exposed to an environmental factor being measured - in this embodiment it is the pressure inside a shale gas well. No calibration needs to be done and no other parameter must be compensated.

The change of birefringence $\Delta B_{meas}(x)$ is therefore almost a direct result of measurement.

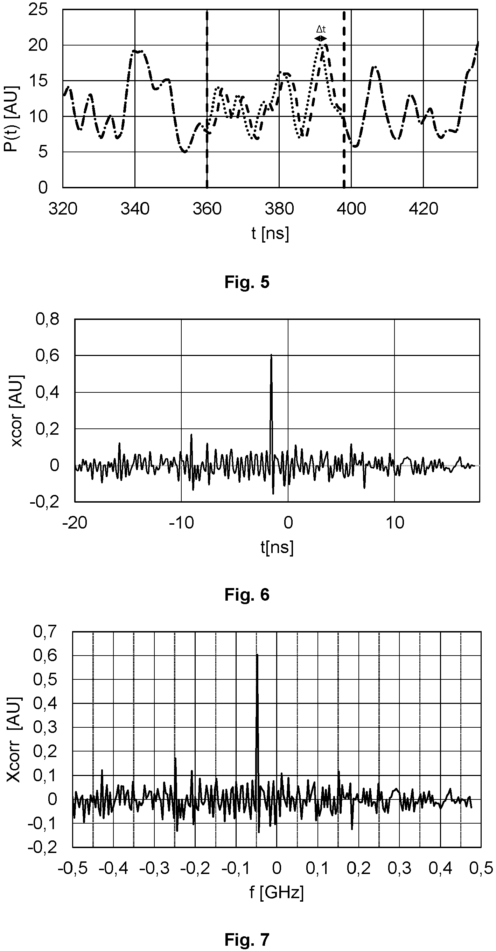

The fast signal and the slow signal are shown schematically in Fig. 5. A delay $\Delta$t between the fast signal and the slow signal corresponds to the deviation of birefringence with respect to $B_0(x)$. If frequency offset $\Delta f = B_{model} = B_0(x)$ corresponds exactly to birefringence, then the back-reflected signals polarized along both axis are exactly overlapped. When the birefringent measurement optical fiber is exposed to changes of parameters, the delay varies in time and corresponds to change in birefringence. Therefore, signals can be divided into spatial sections having duration determined by a spatial resolution. The spatial sections correspond to actual physical sections of the birefringent measurement optical fiber **160.** For each section of the birefringent measurement optical fiber **160,** a spectral shift between the slow signal having the slow spectrum and the fast signal having the fast spectrum is measured. Based on this shift of spectrums, the birefringence $B(x_n)$ of the n-th section of the birefringent measurement optical fiber corresponding to the length $x_n$ can be found. Repeating the above for sections along the birefringent measurement optical fiber **160** results in obtaining $\Delta f_{meas}(x) \simeq \Delta B_{meas}(x)$ .

To determine change of the birefringence by the CHIRP-OTDR, the fast and the slow signals are correlated with each other for a given location x placed along the birefringent measurement optical fiber **160**. A function of the correlation of the n-th section of the slow signal and the fast signal in time domain is shown in Fig. 6. Fig. 7 shows the same correlation function but executed on signals represented in a frequency domain. Misplacement of the cross-correlation function with respect to 0 represents a frequency shift corresponding to the birefringence reduced by an initial frequency offset $\Delta$f. A reduction is important as cross-correlation as well as other methods of determining mutual shift of similar waveforms are statistically more prone to errors for higher shifts. Accordingly, a risk of error is lower for lower frequency shifts. If wavelength of radiation changes exactly linearly with time, then shape of cross-correlation functions shown in Fig. 6 and 7 have the same shape. Generally, it is possible to recalculate time delay to a frequency delay.

If the frequency offset $\Delta$f of the fast radiation component in comparison with slow radiation component is perfectly set to the value of the model birefringence $B_{model}$ and a measurement is performed in the exact same conditions in which $B_{model}$ was determined, then the location of a maximum of the cross-correlation is exactly 0. Otherwise, the difference of birefringence $\Delta B(x)$ corresponds to the location of a maximum of cross-correlations between the cross-correlation of the fast and slow signals for example: -0.048 GHz in Fig. 7.

Even when value of the model birefringence $B_{model}$ is not accurate and there is an initial offset of cross-correlation, it can be easily calibrated by a measurement in known conditions. In fact, for a measurement to be possible with commonly available components, it is enough if the actual birefringence reduced by the frequency offset $\Delta$f is lower than 100 MHz: $|B(x) - \Delta f| \leq$ **100** MHz. With a better equipment it is possible to measure up to $|B(x) - \Delta f| \leq$ **500** MHz. On the other hand, the lower is the $|B(x) - \Delta f|$, the lower is the risk that the cross-correlation of another applied frequency shift evaluation method would give erroneous result. It has been found that if difference between the actual measured birefringence in a given point x and the frequency offset is less than or equal to 10 MHz: $|B(x) - \Delta f| \leq$ **10 MHz,** there is no use to trying to reduce it further - the risk of error remains substantially the same.

It is possible to use other measures than cross-correlation to determine time or frequency shift and consequently birefringence. Least mean square (LMS) is an example of a measure that can be easily applied. Appropriate method is disclosed in L. Zhang, L. D. Costa, Z. Yang, M. A. Soto, M. Gonzalez-Herráez and L. Thévenaz, "Analysis and Reduction of Large Errors in Rayleigh-Based Distributed Sensor," in Journal of Lightwave Technology, vol. 37, no. 18, pp. 4710-4719, 15 Sept.15, 2019, doi: 10.1109/JLT.2019.2917746.

Other techniques known in the art for determination of the shift in time or frequency can also be applied including, in particular neural networks.

In certain applications e.g., related to a measurement of temperature or pressure in deep shafts, it may be necessary to use different model values of a birefringence corresponding to different depths in order to extend the maximal range of change of the parameter to be measured. The measurement can be performed with a single optical fiber but in separate scans. For convenience of such approach, a measurement system with a tunable frequency offset is required. Introduction of two modes with initially shifted frequencies by a frequency shift Δf allows for extension of measurement range (par$_{min}$,par$_{max}$). If measured parameter changes monotonically along the optical fiber - a condition which is often true in mines and shaft in which pressure and temperature change monotonically with depth - the range can be further extended if different frequency shift Δf is used in different sections of the optical fiber. Key factor is that OTDR allows for determination of measurement in certain position x along the optical fiber and therefore if relation between x and measured parameter is coarsely predictable a total measurement range (par$_{min}$,par$_{max}$) can be divided into sub-ranges (par(x)$_{min}$,par(x)$_{max}$) corresponding to particular positions or sections of an optical fiber. Use of different Δf(x) in different sub-ranges extends subranges and therefore contributes to extension of the total measurement range. Each scan corresponds to different model value of birefringence therefore, when combined, scans correspond to extended measurement range. Experiment is quite easy to plan if adequate values of birefringence to particular sections along physical length of the optical fiber are known. It is often true for measurement along shafts. For such approach, a measurement system with tunable frequency offset is required.

Although birefringence B(x) along the shaft depends on an unknown value of the parameter to be measured. Initial expectations with respect to coarse value of the parameter to be measured can be used to determine convenient values of B$_{model}$ for particular segments of the birefringent measurement optical fiber **160.** That requires separate measurements for those segments but extends the measurement range. For example, in measurements of the pressure in a deep shaft (on the assumption that the main pressure component is hydrostatic pressure) it is possible to estimate that:

$$B_{model1} = 6{,}7 GHz \qquad for \; x \leq 100 \; m$$

$$B_{model2} = 7{,}2 GHz \quad for \; 100m \leq x \leq 200 \; m$$

$$B_{model3} = 8{,}7 GHz \quad for \; 200 \; m \leq x \leq 300 \; m$$

The value of x represents the position along the birefringent measurement optical fiber **160** length and corresponds to the depth of the shaft. Expected values of the pressure and therefore adequate **$B_{model}$** to be used are relatively easy to estimate as it depends on the depths in coarsely linear manner.

It often happens that there is more than one parameter, including birefringence, that affects the properties of an optical fiber. The second parameter may also be a parameter under test or just a factor that contributes to an error of measurement.

If an environmental factor, other than the measured one, contributes to the birefringence and degrades an accuracy of measurement it is possible to mitigate it using a reference signal or reference signals.

In a less simple scenario, pressure is a parameter under test, when changes of temperature exceed the expected accuracy of measurement. Then it is advisable to also take measurements in normal conditions to obtain the reference signal or signals. Accordingly, the measurement includes:

- a fast reference signal being a result of detection of the fast radiation component, received from the birefringent measurement optical fiber **160** in normal conditions;

- a slow reference signal being a result of detection of the slow radiation component, received from the birefringent measurement optical fiber **160** in normal conditions;

- a fast signal being a result of detection of the fast radiation component, received from the birefringent measurement optical fiber **160** and

- a slow signal being a result of detection of the slow radiation component, received from the birefringent measurement optical fiber **160.**

If side-hole optical fiber is applied, then typical sensitivity of its birefringence to temperature is 6 MHz/K and typical sensitivity of its birefringence to pressure is 159 MHz/bar. Accordingly, if the expected range of temperature change is 35°K then its range of change of birefringence corresponding to temperature is 210 MHz. The same change of temperature corresponds to a change of 1.3 bar in pressure. Accordingly, the temperature shift may cause a pressure measurement error of 1.3 bar. If that error is not acceptable, an additional equation is needed to also determine temperature or to only deconvolute pressure.

Let us consider a simple case of equation obtained from an intermodal spectral shifts or birefringences equation and equation resulting from measurement of in one polarization axis:

$$\begin{cases} \Delta f_s(x) = \dfrac{\partial f_s}{\partial p} \cdot \Delta p + \dfrac{\partial f_s}{\partial T} \cdot \Delta T & \textit{one axis } 1 \\[4mm] \Delta B(x) = \dfrac{\partial B}{\partial p} \cdot \Delta p + \dfrac{\partial B}{\partial T} \cdot \Delta T & \textit{birifringence} \end{cases}$$

in which $\Delta \boldsymbol{f_s(x)}$ represents frequency shift of the slow component along the physical length of the optical fiber and $\dfrac{\partial f_s}{\partial p}, \dfrac{\partial f_s}{\partial T}, \dfrac{\partial B}{\partial p}, \dfrac{\partial B}{\partial T}$ depend on the optical fiber and need to be a'priori determined or read from the specification.

When using CHIRP-OTDR technique, due to technical limitations of laser technology, one can obtain only certain chirp bandwidth in a single pulse. Spectral content of the single pulse defines maximum spectral shift between reference signal and measurement signal. Usually, spectral shift included in single pulse is too low for practical use in temperature or strain sensing. This limitation of CHIRP-OTDR is known in the art and overcame by the present invention partially, or entirely (if all measurements are based on intermodal spectral shift).

Known solution to this limitation is updating the reference measurement in each measurement cycle. This way last measurement signal (n-1) becomes reference for next measurement (n) and spectral shift $\Delta \boldsymbol{f_s(x)}$ is sum of spectral shift accumulated from previous measurements (1,...,n-1) and spectral shift between signal from measurement n and n-1.

$$\Delta f_s(x)_n = \Delta f_s(x)_{n-1} + \dfrac{\partial f_s}{\partial p} \cdot \Delta p_n + \dfrac{\partial f_s}{\partial T} \cdot \Delta T_n \qquad \textit{slow signal}$$

However, as every measured spectral shift has its limited uncertainty, uncertainty of final measurement depends on number of accumulated measurements.

In state-of-the-art CHIRP-OTDR setup it is possible to measure birefringence change as difference between results of cross correlation of fast component with fast reference signal and slow component with slow reference signal.

$$\Delta B(x) = \Delta f_f(x) - \Delta f_s(x)$$

As $\Delta \boldsymbol{f_f(x)}$ *and* $\Delta \boldsymbol{f_s(x)}$ is a cumulative measurement with cumulative uncertainty, the uncertainty of birefringence measurement also will increase in time of the measurement.

On contrary the present invention bases on equation:

$$\Delta B(x) = B_{meas}(x) - B_0(x) \qquad \textit{birifringence}$$

As $\boldsymbol{B_{meas}(x)}$ is a measurement that only correlates current signal from both optical fiber axis and does not refer to any other previous measurements, result of the measurement is devoid of cumulative error.

In case of measuring two intermodal spectral shifts, in particular birefringences in multicore fiber susceptible to pressure and temperature the inventions allow to formulate the system of equations that can be solved with one or both: pressure and/or temperature.

A range of expected changes determines parameters of the chirp signal. The maximal frequency change of chirp signal depends on $\dfrac{\partial B}{\partial p}\Delta p_{max} + \dfrac{\partial B}{\partial T}\Delta T_{max}$ and $\dfrac{\partial f_s}{\partial p} \cdot \Delta p_{max} + \dfrac{\partial f_s}{\partial T} \cdot \Delta T_{max}$ .

Required accuracy of a measurement with respect to the length of an optical fiber determines the length of the measurement pulse which gates the chirp signal - see Fig. 2. Maximal length of an optical fiber used in measurement is limited by limitations of pulse power , fiber polarization extinction ratio, fiber attenuation and pulse extinction ratio.

According to the embodiment, in the system according to the invention applicable for use with the method according to the invention two separate but synchronized radiation sources are applied for exciting a fast radiation component and a slow radiation component. A block diagram of the system is shown in Fig. 1. The system comprises a first radiation source **111,** and a spectrum shaping system **140,** comprising a second radiation source **112.** The spectrum shaping system **140** further has a shift synchronization unit **145** that ensures a desired frequency offset Δf between the radiation sources **111, 112.** The shift synchronization unit **145** is connected to control inputs of the first and the second radiation sources **111, 112** for synchronization of the first and the second radiation sources **111, 112,** so that both radiation sources **111, 112** have a saw-like modulated wavelength. The shift synchronization unit **145** further ensures that the frequency of the first radiation source **112** is higher than the frequency of the second radiation source **112** by a value of frequency offset Δf.

The system further has a birefringent measurement optical fiber **160** and a radiation feeding subsystem **120,** for feeding to the birefringent measurement optical fiber **160** the fast radiation component from the first optical radiation source **111** polarized along the fast axis and for simultaneous feeding to the birefringent measurement optical fiber **160** the slow radiation component from the second radiation source **112** polarized along a slow axis.

The radiation feeding subsystem **120** comprises polarization beam splitter **124** having one input connected to the second radiation source **112** and other input connected to the first radiation source **111** via a 90° polarization rotator **123.**

The value of the frequency offset Δf between the fast component frequency of the fast radiation component and the slow component frequency of the slow radiation component corresponds to model birefringence - in many applications it is just a birefringence of the birefringent measurement optical fiber **160** in normal conditions or other known conditions.

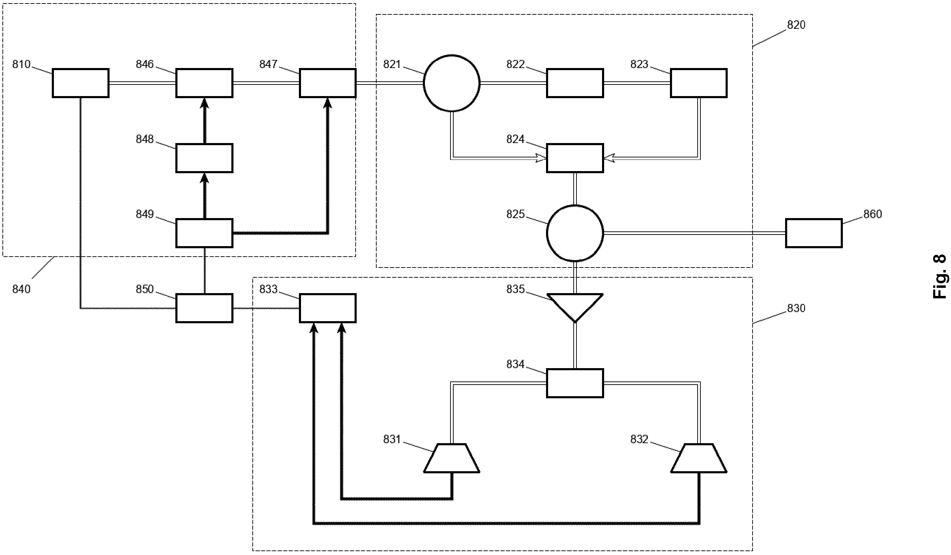

Naturally, any drift of the frequency offset Δf between the fast radiation component and the slow radiation component contributes to a measurement error. There are numerous ways of providing reasonably good synchronizations. An elegant and effective yet not efficient one is to use amplitude modulation. Double sideband central carrier suppressed modulation is particularly useful. A measurement setup adapted to use this technique is shown in Fig. 8. The use of an amplitude modulation involves significant loss of power but guarantees the frequency offset Δf as good as a doubled stability of a radio frequency modulating signal at c.a. 3.35 GHz. Loss of power can be partially compensated by amplification with EDFA and by application of the CHIRP-OTDR (Coherent Optical Time Domain Reflectometry - as disclosed in article Fernández-Ruiz, Maria R. & Costa, Luis & Martins, Hugo. (2019). Distributed Acoustic Sensing Using Chirped-Pulse Phase-Sensitive OTDR Technology. Sensors. 19. 4368. 10.3390/s19204368) analysis, which enables high measurement dynamics. Typical values of birefringence of birefringent measurement optical fibers used for sensing pressure vary between 5 GHz and 10 GHz, mostly between 6 and 7 GHz. Accordingly, it is desirable to provide a modulating signal having a frequency of ½Δf and tunable between 3 GHz and 3.5 GHz at least or preferably between 2.5 GHz and 5 GHz. Naturally, it is also possible to use fixed, not tunable signals that match only one birefringent measurement optical fiber. Higher tuning range would allow the system to be compatible also with relatively rare birefringent measurement optical fibers having birefringence exceeding 10 GHz or lower than 5 GHz. However, certain applications require using fibers having birefringence even of 50 GHz - e.g. panda fiber for temperature sensing.

An example of a measurement system with frequency offset between fast and slow radiation components obtained with an amplitude modulation of signal from just one radiation source is discussed in detail below. Block diagram of said measurement system is shown in in Fig. 8.

Amplitude modulation can be applied to a radiation from a radiation source **810** having a saw-like modulated wavelength. The radiation from the radiation source **810** is fed to an amplitude optical modulator **846** with a harmonic modulating signal having a frequency of ½Δf and a frequency filtering to feed an upper ribbon of amplitude modulated radiation polarized along the fast axis and a lower ribbon of amplitude modulated radiation polarized along the slow axis. When bias is set to bias null point then double sideband modulation central carriers suppressed is obtained.

A measurement system includes radiation source **810** with the saw-like modulated wavelength working under control of a processing unit **850.** The processing unit **850** also receives signals from an acquisition subsystem **830** having a first detector **831** and a second detector **832** for detecting the fast and the slow radiation components received from a birefringent measurement optical fiber **860.**

Measurement system, according to this embodiment of the invention, has a spectrum shaping subsystem **840** for generation of a first mode radiation component having a first frequency, and a second mode radiation component having a second frequency.

Both the first and the second mode radiation components have the saw-like modulated wavelength, and the frequency of the first mode radiation component is higher by a determined value of frequency offset Δf, than the frequency of the second mode radiation component, wherein the value of frequency offset Δf corresponds to a model value of birefringence of the birefringent measurement optical fiber **860.**

Radiation feeding subsystem **820** is responsible for feeding a first (fast) radiation component to the birefringent measurement optical fiber **860** polarized along the fast axis, and a second (slow) radiation component to the birefringent measurement optical fiber **860** polarized along the slow axis.

The spectrum shaping subsystem **840** comprises a harmonic signal generator **849** having frequency $f_0$ tunable within a range of 0 ÷ 0.4 GHz, providing a radio frequency signal. In calibration, the frequency $f_0$ is set to value of 0.5

$B_{model}$. Harmonic signal generators **849** such as arbitrary signal generator, are often provided with multiple outputs. Therefore, one of the outputs may be used to feed the harmonic signals and the other to feed a pulsed signal. The output of signal generator **849** providing pulses, in this embodiment is fed to a pulse shaping module **847** of the amplitude optical modulator **846.**

The amplitude optical modulator **846** is fed with the radiation from a radiation source **810** being a carrier signal and a signal from the driver **848** being a modulating signal. An output of the amplitude optical modulator **846** is fed to a pulse shaping module **847** also receiving a radio frequency signal from the harmonic signal generator **849.** The amplitude optical modulator **846** has a BIAS set to a bias null point. This results in a double sideband central carrier suppressed modulation. Naturally, the principle of applying amplitude modulation can be applied in numerous other configurations. This one, however, has relatively small losses - approximately 7 dB, which is not high for the amplitude modulation but still significant to a loss in the measurement system.

The pulse shaping module **847** suppresses carrier frequency and sends amplified signal in pulses applicable for CHIRP-OTDR. Pulse width in this example is 50 ns ÷ 100 ns, which is applicable for obtaining 5 to 10 m of spatial resolution. However, if another resolution was required different pulse duration should be applied. Person skilled in the art is qualified to select applicable pulse duration for a given application.

The output signal of the pulse shaping module **847** comprises slow component frequency sidebands and fast component frequency sidebands in a frequency spectrum. The fast component frequency sideband corresponds to the fast component frequency and the low component frequency sideband corresponds to the slow component frequency. A signal from the pulse shaping module **847** is fed to the radiation feeding subsystem **820,** specifically to a circulator **821.** Radiation which is propagating along transmission of the circulator **821** is fed to a frequency filtering device **822.**

In the present embodiment, the frequency filtering device **822** is an optical fiber provided with a Bragg grating acting as a bandpass filter. It has selected geometry so that the fast component frequency sideband is transmitted, while the slow component frequency sideband is back reflected to the circulator **821** and through its 3rd port to the input of the polarization beam splitter **824.** The fast sideband coming through the frequency filtering device **822** is fed to the other input of the polarization beam splitter **824** via a 90° polarization rotator **823.** In this example, it is a simple rotated splicing. Alternatively, a polarization switch can be used.

The output signal from the polarization beam splitter **824** comprises the fast radiation component having the fast component frequency (corresponding to the fast sideband) and the slow radiation component having the slow component frequency (corresponding to the slow sideband). The fast and the slow radiation components have polarization rotated with respect to each other by 90° and are ready to be fed to the birefringent measurement optical fiber **860.**

The output signal from the polarization beam splitter **824** is fed to a first port of a circulator **825** and then it is transmitted via transmission of the circulator **825** to the second port of the circulator **825** to which the birefringent measurement optical fiber **860** is connected.

Backscattered signal from the birefringent measurement optical fiber **860** returns to the second port of the circulator **825** and is transmitted to the third port of the circulator **825** to feeding radiation to the acquisition subsystem **830.**

Splices and optical fibers used in the system maintain polarization. The circulator **825** works with both polarization axis.

A signal that comes to the acquisition subsystem **830** is amplified by an optical amplifier **835** and fed to the polarization beam splitter **834,** which directs the fast radiation component to the first detector **831** and the slow radiation component to the second detector **832.** Signals from detectors **831, 832** are fed to the processing unit **850** via a data acquisition card **833.** A 2 GHz acquisition card is enough for measurements of pressure because the model birefringence is compensated by use of the higher frequency in the fast axis radiation component than for the slow axis frequency component. A direct CHIRP-OTDR measurement of a typical birefringence would require use of a chirp signal having range of wavelengths c.a. five times larger than the birefringence to be measured, as typical values of birefringence applicable in measurements reach 5 GHz - 10 GHz. Consequently, a radiation source tunable in range up to 50 GHz would be required. Typical of-the-shelf radiation sources are typically tunable in range up to 400 MHz. Additionally, it would be required to use an acquisition circuit including a detector applicable to sampling signals having a bandwidth exceeding 25 GHz accordingly, as CHIRP-OTDR is quite universally acknowledged as a technique not applicable for direct measurements involving birefringence. These limitations make CHIRP-OTDR not applicable for birefringence measurement with measurement optical fibers having high birefringence, nevertheless this limitation is overcome by the invention.

The optical amplifier **835** in this embodiment is erbium doped optical fiber amplifier - one of typical choices of photonics engineer.

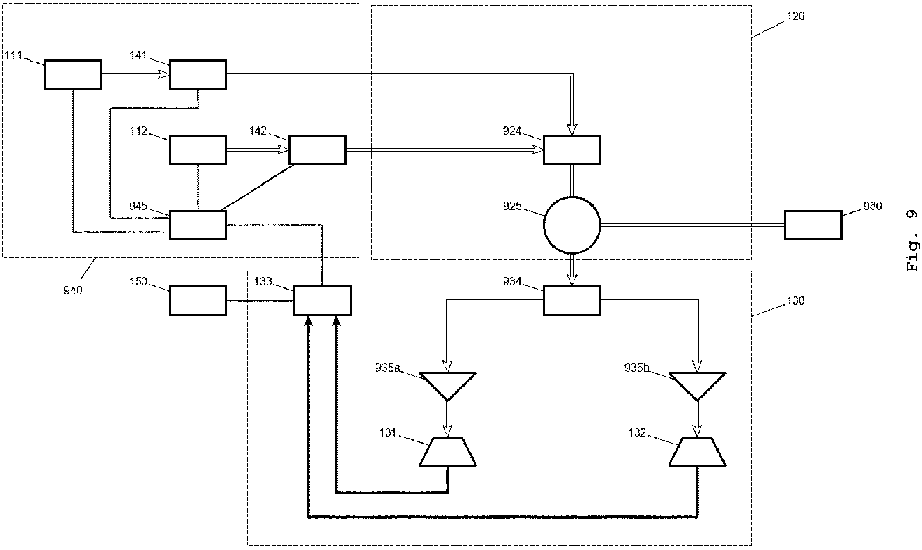

Although birefringence is well known, thoroughly examined by numerous researchers and perhaps the best described in art, other intermodal spectral shifts are also applicable for sensing according to the invention. An example of applicable optical measurement system according to the invention is shown in Fig. 9. The spectrum shaping subsystem **940** is similar to the one applied in the first embodiment, described with reference to Fig. 1. Instead of tunable shift synchronization unit a fixed shift synchronization unit **945** was applied. Accordingly, there is no control signal from PC

150. Such structure is simpler, however adapted to operation with only one type of optical fibers and in limited measurement range. It is noted that person skilled in the art will easily recognize that tunable shift synchronization unit would also be applicable in example described below - if needed.

The spectrum shaping subsystem **940** has a first radiation source **111** which is a chirp-laser with a pulse shaping module **141** adapted to generate pulses when triggered with signal from shift synchronization unit **945**. A second radiation source **112** is a chirp-laser with pulse shaping module **142** adapted to generate pulses when triggered with signal from shift synchronization unit **945**. The first radiation source **111** has higher frequency and is used to generate a fast radiation component and the second radiation source **112** is used to generate a slow radiation component. To maintain constant frequency shift and synchronized generation of pulses, a shift synchronization unit **945** is applied. Shift synchronization unit **945** is fixed to frequency shift $\Delta f$.

Both the first and the second source are connected to selective mode excitation device **924** adapted to excite the radiation from the first radiation source **111** in the first mode LP11 and radiation from the second radiation source **112** in the second mode LP01. Multimode radiation from the mode excitation device **924** is directed to multimode circulator **925** connected to measurement optical fiber **960**. Radiation backscattered from the measurement optical fiber **960** is directed by multimode circulator **925** to acquisition subsystem **930**.

In acquisition subsystem **130** radiation components backscattered from the measurement optical fiber **960** are separated with mode separator **934**. First mode radiation component separated in mode separator **934** is directed to a first detector **131,** while the second mode radiation component separated with mode separator **934** is directed to the second detector **132**. Detectors **131, 132** are provided with amplifiers 935a, 935b. Results of detection are acquired with data acquisition card **133** which supplies it to processing unit **150**. Processing unit is adapted to determine mutual shift between the modes with cross correlation or other applicable technique and obtain intermodal spectral shift that can be transformed to parameter under test.

Measurement optical fiber **960** is an optical fiber with Pb and Ge doped silica with core diameter 8,2 um (similar to an optical fiber described in paper X. Pan i in., "Enhanced FBG Temperature Sensitivity in PbS-Doped Silica Optical Fiber", J. Light. Technol., t. 37, nr 18, s. 4902-4907, wrz. 2019, doi: 10.1109/JLT.2019.2937138). However, a person skilled in the art after learning the teachings of the present description is able to suggest with an ease other optical fibers and applicable modes.

For modes LP11 and LP01 intermodal spectral shift $B_{\{11,01\}}$ in normal conditions (20 °C) is approximately 24 GHz. Sensitivity of the intermodal spectral shift between modes LP11 and LP01 $B_{\{11,01\}}$ to temperature is c.a.

$$\frac{\partial B}{\partial T} = 38.2 \text{ MHz/K}$$

. Accordingly, in certain applications in which high accuracy is not required and changes of other parameters are limited and measurement optical fiber has uniform parameters along its length, it is acceptable to neglect impact thereof on a readout and use following approximation:

$$T_{meas}(x) \simeq T_0 + \frac{\Delta B_{\{01,11\}}(x)}{\frac{\partial B(x)}{\partial T(x)}} \simeq T_0 + \frac{\Delta f_{meas}(x)}{\frac{\partial B(x)}{\partial T(x)}}$$

$T_{meas}(x)$ represents measured temperature, where $T_0$ stands for temperature in which reference value intermodal spectral shift was measured.

If more than two modes are excited above equation can easily be generalized to system of equations allowing determination of two parameters $p_1$, $p_2$.

$$B_{\{mn,xy\}}(x) = \frac{\partial B_{\{mn,xy\}}}{\partial p_1} \cdot \left( p_1(x) - p_{1_0}(x) \right) + \frac{\partial B_{\{mn,xy\}}}{\partial p_2} \cdot \left( p_2(x) - p_{2_0}(x) \right) + B_{\{mn,xy\}_0}(x)$$

$$B_{\{ab,xy\}}(x) = \frac{\partial B_{\{ab,xy\}}}{\partial p_1} \cdot \left( p_1(x) - p_{1_0}(x) \right) + \frac{\partial B_{\{ab,xy\}}}{\partial p_2} \cdot \left( p_2(x) - p_{2_0}(x) \right) + B_{\{ab,xy\}_0}(x)$$

where LPab, LPmn, LPxy are excited modes, and $B_{\{nm,xy\}}$ represents intermodal spectral shift between modes LPmn and LPxy while $B_{\{nm,xy\}}$ represents intermodal spectral shift between modes LPab and LPxy. Use of more than two modes requires modification of the spectrum shaping subsystem, mode excitation subsystem and acquisition subsystem; $B_{\{mn,xy\}_0}$, $B_{\{ab,xy\}_0}$ represent intermodal spectral phase shifts measured in reference, eg. normal conditions, corresponding to values of parameters $p_{10}, p_{20}$. If in measurements model values of spectral phase shifts are applied - respectively $\Delta f_{\{mn,xy\}}, \Delta f_{\{ab,xy\}}$ then direct measurement of spectral shifts between modes with a method according to the invention gives:

$$\Delta f_{\text{meas}\{mn,xy\}}(x) = B_{\{mn,xy\}}(x) - B_{\{mn,xy\}_{model}}$$

$$\Delta f_{\text{meas}\{ab,xy\}}(x) = B_{\{ab,xy\}}(x) - B_{\{ab,xy\}_{model}}$$

and hence initial knowledge of $p_{10}, p_{20}$, $B_{\{mn,xy\}model}$, $B_{\{ab,xy\}model}$, $B_{\{mn,xy\}0}(x)$, $B_{\{ab,xy\}0}(x)$ determined e.g. in calibration and knowledge of measured $\Delta f_{\text{meas}\{mn,xy\}}(x), \Delta f_{\text{meas}\{ab,xy\}}(x)$ enables solving the system of equations and determination of $p_1(x), p_2(x)$.

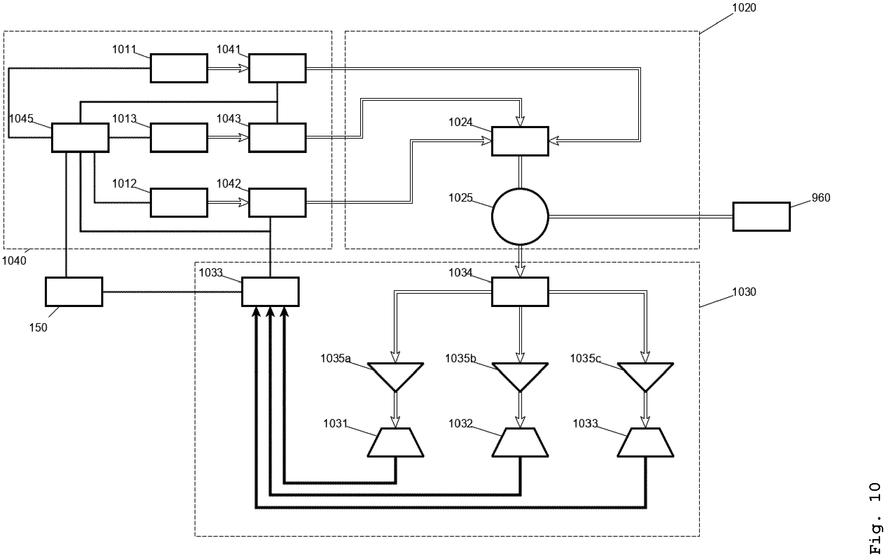

A block diagram of an example of optical measurement adapted to excite three modes and detect and acquire three signals to obtain two intermodal spectral shifts parameters is shown in Fig. 10.

Spectrum shaping subsystem **1040** comprises three radiation sources realized as chirp lasers **1011, 1012, 1013,** which are connected to pulse shaping modules **1041, 1042, 1043** respectively. Chirp lasers **1011, 1012, 1013,** are connected to shift synchronization unit **1045.** Shift synchronization unit provides triggering signals to pulse shaping modules **1041, 1042, 1043** as well as three channel acquisition card **1033.** Shift synchronization unit **1045** is adapted to drive chirp lasers **1011, 1012, 1013** so as to provide tunable frequency shifts $\Delta f_{\{ab,xy\}}$ and $\Delta f_{\{mn,xy\}}$ between chirp lasers **1011, 1013** and **1012, 1013** respectively.

Radiation excitation subsystem **1020** comprises selective mode excitation device **1024** and circulator **1025** adapted to operate with multiple modes excited by selective mode excitation device **1024.** Signal from the circulator **1025** is fed to measurement optical fiber **960.** Signal backscattered (Rayleigh phenomenon) from the measurement optical fiber **960** is guided via circulator **1025** to acquisition subsystem **1030.**

In acquisition subsystem **1030** backscattered signal is fed to selective mode filtering device **1034,** which feeds radiation component propagating in mode LPmn to detector **1031** with input amplifier **1035a,** radiation component propagating in mode LPab to detector **1032** with input amplifier **1035b** and radiation component propagating in mode LPxy to detector **1033** with input amplifier **1035c.** Signals from detectors **1031, 1032, 1033** are sampled and delivered to processing unit **150** adapted to compute intermodal spectral phase shifts formulate system of equations and solve it with respect to measured parameters p1, p2.

Due to the fact that imposed frequency shifts $\Delta f_{\{mn,xy\}}$ and $\Delta f_{\{ab,xy\}}$ correspond to model values of respective intermodal spectral shifts $B_{\{mn,xy\}0}$ and $B_{\{ab,xy\}0}$ state of the art acquisition cards and detectors can be used to determine changes in intermodal spectral shifts caused by change of parameters under test from their model (normal) values.

Use of multiple modes may involve use of modes propagating in different cores of multicore optical fiber. Such embodiments of the invention require multicore measurement optical fiber. Particularly advantageous are measurement optical fibers having cores adapted to guiding modes having intermodal spectral shift demonstrating different sensitivity to different parameters.

Examples of applicable optical fibers are given in publication no WO2017002460A1. WO2017002460A1 discloses polarization maintaining multicore optical fiber with cores having different sensitivity of intermodal spectral shifts for polarization modes - specifically different sensitivity of birefringence in different cores for external parameters. WO2017002460A1 disclosed optical fiber structure provided with stress applying rods. It is possible to change the birefringence of the core by changing interval between the pair of stress applying portions, the size of the stress applying portion, or the thermal expansion coefficient thereof. That configuration applied to embodiment of the present invention allows to affect conditioning of the equation system by selecting proper measurement optical fiber.

In an embodiment described below a four-core optical fiber having structure according to Fig. 1 of WO2017002460A1 is used as measurement optical fiber **1160.** Only two diagonal cores are fed with radiation. Stress applying rods are arranged so that sensitivity of birefringence in said cores to pressure and temperature is different for each of the cores.

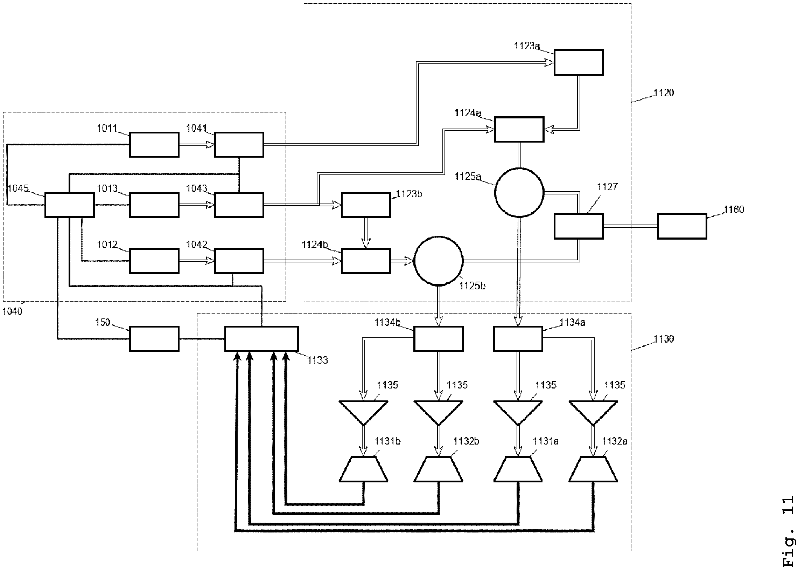

Simultaneous measurement of two birefringences each in different cores of measurement optical fiber **1160** according to the invention requires exciting radiation of at least three frequencies and use of four detectors. A block diagram of an embodiment of optical measurement system therefor is shown in Fig. 11.

Dual birefringent core measurement optical fiber **1160** is used as measurement optical fiber. Optical Fiber is selected so that sensitivity of birefringence to the parameter under test is different in the first core than in the second core. The spectrum shaping subsystem **1140** is adapted to generate a first, a second and a third radiation component. A frequency of the first mode radiation component is higher than a frequency of the third radiation component by a frequency shift $\Delta f_{13}$, corresponding to predefined model value of birefringence in the first core $\Delta f_{13} \simeq B_{1,0}$. A frequency of the third radiation component is higher than a frequency of the second mode radiation component by a frequency

shift $\Delta f_{23}$, corresponding to predefined model value of birefringence in the second core $\Delta \boldsymbol{f_{23}} \simeq B_{2,0}$.

Spectrum shaping subsystem **1040** serving above purpose in the present embodiment is identical to the one described with reference to Fig. 10. However, radiation feeding subsystem 1120 is substantially different.

The radiation feeding subsystem **1120** has a core addressing device **1127** adapted to feed radiation provided on inputs into different cores on output while preserving polarization. The radiation feeding subsystem is adapted to feed the first and the third radiation component to the first core so that the first and the second mode radiation components are polarized orthogonally, respectively along the fast and the slow axis of the first core. Additionally, the radiation feeding subsystem **1120** is adapted to feed the third and the second mode radiation component to the second core so that the third and the second mode radiation components are polarized orthogonally respectively along the fast and the slow axis of the second core.

Specifically, radiation from chirp lasers **1011, 1012,** 1013, is delivered to radiation feeding subsystem **1120** via pulse shaping modules **1041, 1042, 1043** respectively.

Radiation originating from the first chirp laser **1011** is directed to 90° polarization rotator **1123a** and then to polarization beam splitter **1124a** to be combined at the output of polarization beam splitter **1124a** with radiation from the third chirp laser **1113** fed to the second input of the polarization beam splitter **1124a**. Output of the beam splitter **1124a** is connected with input of the first circulator **1125a** feeding radiation to measurement optical fiber **1160** via core addressing device **1127.**

Radiation originating from the second chirp laser **1012** is directed to polarization beam splitter **1124b** to be combined at the output of polarization beam splitter **1124b** with radiation from chirp laser **1113** fed to the second input of the polarization beam splitter **1124b** via 90° polarization rotator **1123b**. Output of the beam splitter **1124b** is connected with input of the second circulator **1125b** feeding radiation to measurement optical fiber **1160** via core addressing device **1127.**

Core addressing device **1127** is arranged to feed radiation from the first circulator **1125a** to the first core of the measurement optical fiber **1160** and to feed radiation from the second circulator **1125b** to the second core of the measurement optical fiber **1160.**

Radiation in the first and in the second core is Rayleigh backscattered along the measurement optical fiber **1160** to propagate back via core addressing device **1127** to the first **1125a** and the second **1125b** circulator respectively.

Backscattered radiation passing through the first circulator **1125a** is delivered via polarization beam splitter **1134a** to detectors **1131a** and **1132a** with input amplifiers **1135**. Accordingly backscattered radiation from the first core, polarized with the fast polarization is detected with the detector **1131a** and radiation backscattered from the first core polarized with the slow polarization is detected with detector **1132a**. Hence, detectors **1131a** and **1132a,** connected to the processing unit **150** via acquisition card **1133,** deliver signals allowing to compute birefringence $B_1$ in the first core. Initial frequency shift $\Delta f_{13}$ which compensates model birefringence makes it possible to measure the birefringence directly with of the shelf components.

Backscattered radiation passing through the second circulator **1125b** is delivered via polarization beam splitter **1134b** to detectors **1131b 1132b** with input amplifiers **1135**. Accordingly backscattered radiation from the second core, polarized with the fast polarization is detected with the detector **1131b** and radiation backscattered from the second core polarized with the slow polarization is detected with detector **1132b**. Hence, detectors **1131b** and **1132b,** connected to the processing unit **150** via acquisition card **1133,** deliver signals allowing to compute birefringence $B_2$ in the second core. Initial frequency shift $\Delta f_{23}$ which compensates model birefringence makes it possible to measure the birefringence directly with of the shelf components.

Accordingly, measurement optical system according to the present embodiment delivers information allowing to formulate system of equations:

$$B_1(x) = \frac{\partial B_1}{\partial p} \cdot p(x) + \frac{B_1}{\partial T} \cdot T(x) + B_{1_0}$$

$$B_2(x) = \frac{B_2}{\partial p} \cdot p(x) + \frac{\partial B_2}{\partial T} \cdot T(x) + B_{2_0}$$

which is solvable with respect to pressure p and temperature T providing model values $\boldsymbol{B_{1_0}}$, $\boldsymbol{B_{2_0}}$ of birefringence in the cores, as well as sensitivities $\frac{\partial B_1}{\partial p}, \frac{\partial B_2}{\partial p}, \frac{B_1}{\partial T}, \frac{B_2}{\partial T}$ are known or determined in calibration. If measurement optical fiber is well fabricated and homogenous constant then model values $\boldsymbol{B_{1_0}}$, $\boldsymbol{B_{2_0}}$ are working well. If properties of the measurement optical fiber tend to depend on its length, then the measurement optical fiber needs to be characterized with model functions of birefringence: $B_{10}(x), B_{20}(x).$

It is crucial that according to the invention with imposed initial frequency shift Δf of radiation components it is possible to measure changes of intermodal spectral shift directly to determine parameters such as temperature, pressures, strain etc. in a useful range, without a need to use iterative computation and accumulation of errors resulting from determining the values of parameters from superposition of all the changes since beginning of the measurement which is specific for state of the art methods.

It is possible to use polarization modes, spatial modes, different core modes or combinations thereof.

Other multicore optical fibers applicable as two-core measurement optical fibers are also known in the art.

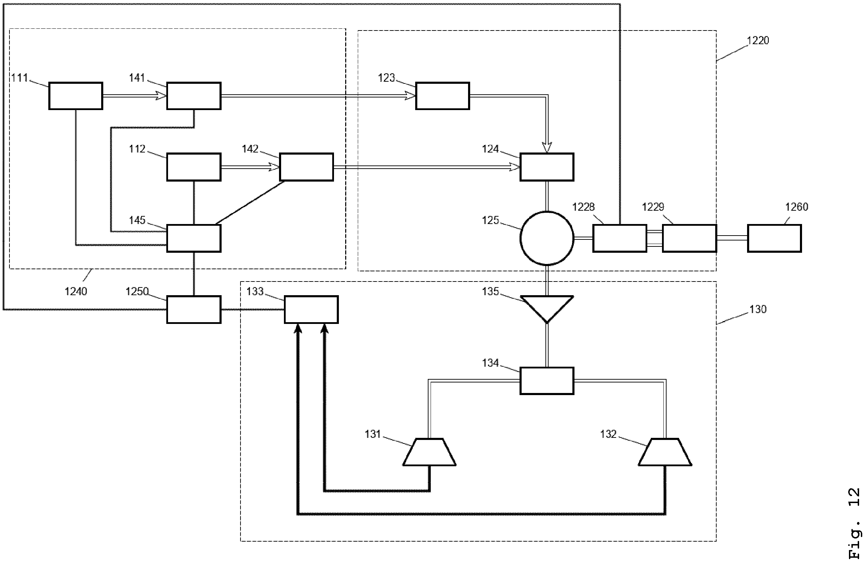

If measured parameters are changing slowly over time, it is possible to adapt embodiment described with reference to Fig. 1, also with multicore optical fiber, with small modification. An example of such configuration is given in Fig. 12 showing block diagram of applicable optical measurement system. The system differs from the one described with reference to Fig. 2 in that it comprises a core switch controlled by processing unit **1250** and adapted to excite radiation component received at an input in a core selected with a control signal from the processing unit **1250.**

Core switch can easily by implemented as combination of an of-the-shelf optical fiber switch **1228** and a fan-in/fan-out element **1129** connected to the cores of the multicore optical fiber. Accordingly, birefringence in the first core and birefringence in the second core can be measured subsequently and still contribute to a common system of equations allowing to determine multiple parameters.

Having read teaching of the present description person skilled in the art can easily scale them up to use more modes and to determine more than two parameters.

The invention is particularly useful for pressure sensing with a side-hole optical fiber as side-hole optical fibers have high birefringence that is susceptible to pressure changes - H. M. Xie, Ph. Dabkiewicz, R. Ulrich, and K. Okamoto, "Side-hole fiber for fiber-optic pressure sensing," Opt. Lett. 11, 333-335 (1986). The invention is easily applicable to measuring other environmental factors which affect multimodal or birefringent propagation in numerous kinds of optical fibers. In particular, but not only, it can be easily applied to measuring temperature, strain, tension or other parameters. Measurements of pressure are just particularly convenient as it is easy to find an optical fiber that has birefringence more sensitive to the pressure than other parameters in certain measurement schemes.

For example, a Panda optical fiber can be used in the invention for temperature sensing. Panda optical fiber is highly applicable to temperature sensing using a method according to the invention as it is rather insensitive to strain and has high birefringence of c.a. 50 GHz which is sensitive to changes of temperature. Problems arising from high birefringence are recognized in literature - "Temperature-strain discrimination in distributed optical fiber sensing using phase-sensitive optical time-domain reflectometry" by: Xin Lu, Marcelo A. Soto And Luc Thévenaz and are solved by the present invention.

Generally photonic crystal optical fibers are recognized as often being susceptible to pressure and often have high birefringence, so they offer a lot of alternatives for side-hole optical fiber as sensing optical fiber.

Horizontal pipes and vertical downhole shafts are promising fields of application for the invention. Optical fibers applied along the pipe either inside or outside are useful to monitor a number of parameters including pressure, temperature and vibrations level that are key for security lifespan. With long pipes it is quite difficult to apply and use other kind of sensor. Optical fiber sensors according to the invention can be used to monitor conditions of fluid transferred in pipes, conditions within empty shafts or external conditions to which pipe is exposed.

The invention is applicable also to sensing other parameters affecting spectral shift between measurement modes, including measure temperature, strain, vibrations, radiations, magnetic field, or pressure.

A person skilled in the art will easily recognize that examples described above are meant to explain the invention rather than limit it. It is clear that any birefringent optical fiber which has high birefringence susceptible to changes of parameter under test can be applied and a person skilled in the art knowing the teachings of the above description is able to easily find a suitable one.

It should be noted that optical measurement system may be used with various measurement optical fibers as long as they are compatible with applied radiation feeding subsystem. Accordingly, in some cases, embodiments of the optical measurement system according to the invention can be used with existing sensing infrastructure including measurement optical fibers.

It is preferable to use a programmable processing unit, then tasks of controlling operation of the optical measurement system and determining the parameter under test from the measurement data can be solved by a computer program consisting of the set of computer-executable instructions and running on the processing unit. The optical measurement system according to the invention can also be used to acquiring raw measurement data only and determination of the parameter under test may be delegated to external or even remote computing machine.

Computer-executable instructions may be laid out in various forms, including routines, programs, objects, components, data structures or scripts executed by one or more computers or other processing devices or virtual machines.

The method according to the invention can be implemented as computer program entirely or partly, at least including code portions for performing steps of the method according to the invention when run on a programmable apparatus, such as a computer system or enabling a programmable apparatus to perform functions of a method or system according to the invention.

Various aspects of the methods and systems disclosed herein, may be used alone, in combination, or in a variety of arrangements not specifically discussed in the embodiments. In particular, a person skilled in the art after reading this specification would be able to combine different kind of modes to obtain more information and be able to solve equations with respect to more than two parameters or to use overdefined systems of equations and reduce errors. The invention therefore is not limited in its application to the details and arrangement of components set forth in the description above or illustrated in the drawings. In particular, aspects described in one embodiment may be combined in any manner with aspects described in another embodiments. Although particular embodiments were shown and described, it will be obvious to those skilled in the art that changes and modifications may be made without departing from this invention in its broader aspects. The scope of the following claims should not be limited by the preferred embodiments set forth in the examples but should be given the broadest reasonable interpretation consistent with the description as a whole.

It should be noted that the above-mentioned embodiments illustrate rather than limit the invention, and that those skilled in the art will be able to design many alternative embodiments. In particular generally spatial modes can be fed subsequently with optical fiber switch or simultaneously via selective mode excitation system. Core modes can be fed with core addressing device. Polarization modes can be obtained with polarization beam splitters or other kind of devices. Spatial modes, core modes and polarization modes can be used in combinations to formulate larger equation systems.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. Method of measuring a parameter under test affecting an intermodal spectral shift of an optical fiber, the method including

feeding a radiation from a radiation source (**111, 112, 810, 1011, 1012, 1013**) to a measurement optical fiber (**160, 860, 960, 1160, 1260**) suitable to guide a first measurement mode and a second measurement mode, so that the radiation propagating in the measurement optical fiber (**160, 860, 960, 1160, 1260**) comprises

a first mode radiation component propagating in the first measurement mode, and
a second mode radiation component propagating in the second measurement mode,

wherein
the radiation fed into the measurement optical fiber (**160, 860,960, 1160, 1260**) has a saw-like modulated wavelength, and
the measurement includes an analysis of

a first result of detection of the first mode radiation component received from the measurement optical fiber (**160, 860, 960, 1160, 1260**)**,** and
a second result of detection of the second mode radiation component received from the measurement optical fiber (**160, 860, 960, 1160, 1260**),

to determine an intermodal spectral shift B(x) and use it to determine a parameter under test
**characterized in that**
the radiation is fed into the measurement optical fiber (**160, 860, 960, 1160, 1260**) in repeated pulses,
the analysis is a chirped pulsed optical time domain reflectometry and it includes analysis of the intermodal spectral shift $B(x)$ as a function of a position $x$, along the measurement optical fiber (**160, 860, 960, 1160, 1260**), including determining a frequency shift $\Delta f_{meas}$ between the first result of detection and the second result of detection

wherein

the first mode radiation component is excited so that it has a frequency that is higher by a value of a frequency offset $\Delta f$ than a frequency of the second mode radiation component

and the value of the frequency offset $\Delta f$ corresponds to a predefined model value of the intermodal spectral shift $B_{model}$ of the measurement optical fiber (**160, 860, 960, 1160, 1260**).

2. Method according to claim 1, **characterized in that** measurement optical fiber is a birefringent measurement optical fiber (**160, 860, 1160, 1260**)

having a fast axis and a slow axis, wherein

the first mode radiation component is a fast radiation component being a component of the radiation polarized along the fast axis of the birefringent measurement optical fiber (**160, 860, 1160, 1260**), and
the second mode radiation component is a slow radiation component being a component of the radiation polarized along the slow axis of the birefringent measurement optical fiber (**160, 860, 1160, 1260**),

and

intermodal spectral shift is a birefringence, and the value of the frequency offset $\Delta f$ corresponds to a predefined model value of the birefringence $B_{model}$ of the birefringent measurement optical fiber (**160, 860, 1160, 1260**).

3. Method according to claim 1 or 2, **characterized in that** at least a third measurement mode is applied to measure a first $B_1(x)$ and second $B_2(x)$ intermodal spectral shift in the measurement optical fiber (**960, 1160**).

4. A method according to claim 1 or 2 or 3, **characterized in that** the frequency shift is determined with a cross-correlation function.

5. A method according to claim 1 or 2 or 3 or 4, **characterized in that** a length of the measurement optical fiber (**160, 860, 960, 1160, 1260**) is divided into at least two sections and for separate single measurements that correspond to different sections, different values of the model value of the intermodal spectral shift $B_{model}$ are applied.

6. A method according to claim 1 or 2 or 3 or 4 or 5, **characterized in that** frequency offset $\Delta f$ is selected so that minimal difference between the first mode radiation component and the second mode radiation component in the single measurement along the single segment of the measurement optical fiber (**160, 860, 960, 1160, 1260**) is lower than 500 MHz.

7. A method according to claim 6, **characterized in that** the frequency offset $\Delta f$ is selected so that minimal difference between the first mode radiation component and the second mode radiation component in the single measurement along the segment of the intermodal spectral shift measurement optical fiber (**160, 860, 960, 1160, 1260**) is lower than 100 MHz.

8. A method according to claim 7, **characterized in that** the frequency offset $\Delta f$ is selected that minimal difference between the first mode radiation component and the second mode radiation component in the single measurement along the segment of the measurement optical fiber (**160, 860, 960, 1160, 1260**) is lower than 5 MHz.

9. Method according to any of the preceding claims, **characterized in that** the excitation of the radiation in the measurement optical fiber (**160, 860, 960, 1160, 1260**) comprises
an amplitude modulation of the radiation from the radiation source (**160, 860, 960, 1160, 1260**) having the saw-like modulated wavelength, with a harmonic modulating signal having the frequency equal to half of the frequency offset $\Delta f$ and a frequency filtering device (**822**) is configured to feed an upper sideband of the amplitude modulated radiation as the first mode radiation component and to feed a lower sideband of the amplitude modulated radiation as the second mode radiation component.

10. Optical measurement system including at least one radiation source (**111, 112, 810, 1011, 1012, 1013**) with a saw-like modulated wavelength and a radiation feeding subsystem (**120, 820, 1020, 1120, 1220**) configured to feed a radiation from the at least one radiation source (**111, 112, 810, 1011, 1012, 1013**) into a measurement optical fiber (**160, 860, 960, 1160, 1260**), suitable to guide a first measurement mode and a second measurement mode, wherein the measurement optical fiber (**160, 860, 960, 1160, 1260**) has an intermodal spectral shift between the first measurement mode and the second measurement mode susceptible to changes of a parameter under test,

and an acquisition subsystem (**130, 830, 1030, 1130**) configured for receiving from the measurement optical fiber (**160, 860, 960, 1160, 1260**):
a first mode radiation component propagating in the first measurement mode, and
a second mode radiation component propagating in the second measurement mode,
and a processing unit (**150, 850, 1250**) adapted to process signals from the acquisition subsystem (**130, 830, 1030, 1130**),
**characterized in that**,
the at least one radiation source (**111, 112, 810, 1011, 1012, 1013**) is adapted to generate the radiation in pulses the measurement system has a spectrum shaping subsystem (**140, 840, 940, 1040, 1240**) for forming radiation components including

a first mode radiation component having a first component frequency, and a second mode radiation component having a second component frequency,
wherein both the first and the second mode radiation components are pulsed and have the saw-like modulated wavelength, and the frequency of the first mode radiation component is higher by a frequency offset Δf than the frequency of the second mode radiation component,

the radiation feeding subsystem (**120, 820, 1020, 1120, 1220**) is adapted for feeding

the first mode radiation component to the measurement optical fiber (**160, 860, 960, 1160, 1260**), propagating in the first measurement mode, and
the second mode radiation component to the measurement optical fiber (**160, 860, 960, 1160, 1260**), propagating in the second measurement mode.

11. Optical measurement system according to claim 10, **characterized in that** the measurement optical fiber is a birefringent measurement optical fiber (**160, 860, 1160, 1260**), having a fast axis and a slow axis suitable to guide

the first measurement mode being the fast measurement mode polarized along the fast axis and
the second measurement mode being the slow measurement mode polarized along slow axis,
the acquisition subsystem (**130, 830, 1030, 1130**) is configured for receiving from the birefringent measurement optical fiber (**130, 830, 1030, 1130**)
a fast radiation component polarized along the fast axis of the birefringent measurement optical fiber (**160, 860, 1160, 1260**), and
a slow radiation component polarized along the slow axis of the birefringent measurement optical fiber (**160, 860, 1160, 1260**),
the spectrum shaping subsystem (**140, 840, 1040, 1240**) is adapted to form

a fast radiation component having a fast radiation component frequency, and
a slow radiation component having a slow radiation component frequency,
wherein the fast radiation component frequency is higher than the slow radiation component frequency by a frequency offset Δf corresponding to a predefined model value of the birefringence,

the radiation feeding subsystem (**120, 820, 1020, 1120, 1220**) is adapted for feeding

the fast radiation component to the birefringent measurement optical fiber (**160, 860, 1160, 1260**) polarized along the fast axis, and
the slow radiation component to the birefringent measurement optical fiber (**160, 860, 1160, 1260**) polarized along the slow axis.

12. Optical measurement system according to claim 10 or 11, **characterized in that** the spectrum shaping subsystem (**840**) comprises a harmonic signal generator (**849**) and an amplitude optical modulator (**846**) for generating of a first sideband corresponding to the fast radiation component and a second sideband corresponding to the slow radiation component, wherein the amplitude optical modulator (**846**) is driven with a harmonic signal from the harmonic signal generator (**849**) and the radiation feeding subsystem (**820**) comprises a frequency filtering device (**822**) for splitting the first sideband and the second sideband into separate radiation components and feeding them to respective, separate inputs of a polarization beam splitter (**824**) for feeding the radiation for the measurement optical fiber (**160, 860, 960, 1160, 1260**), wherein one of the radiation components is fed to the polarization beam splitter (**824**) via a 90° polarization rotator (**823**).

13. Optical measurement system according to claim 10 or 11 or 12, **characterized in that**, the measurement optical fiber (**960**) is adapted to guide more than one spatial measurement mode and the radiation feeding subsystem (**120, 820, 1020, 1120, 1220**) has a selective mode excitation device (**924, 1024**) adapted to feed the radiation provided on the input into different spatial modes on the output, wherein the radiation from the output of the selective mode excitation device is guided to the measurement optical fiber (**960**).

14. Optical measurement system according to claim 10 or 11 or 12 or 13 **characterized in that**,

the measurement optical fiber is a dual birefringent core measurement optical fiber (**1160**) wherein sensitivity of the birefringence to the parameter under test is different between the first core and the second core, the spectrum shaping subsystem (**1140**) is adapted to generate a first, a second and a third mode radiation components so that

a frequency of the first mode radiation component is higher than a frequency of the third mode radiation component by a frequency shift $\Delta f_{13}$, corresponding to a predefined model value of the birefringence in the first core and
a frequency of the third mode radiation component is higher than a frequency of the second mode radiation component by a frequency shift $\Delta f_{23}$, corresponding to a predefined model value of the birefringence in the second core and

the radiation feeding subsystem (**1120**) has a core addressing device (**1127**) adapted to feed the radiation provided on the input into different cores on the output preserving the polarization and the radiation feeding subsystem is adapted to

feed the first and the third mode radiation components to the first core so that the first and the second mode radiation components are polarized orthogonally, along the fast and the slow axis respectively, feed the third and the second mode radiation components to the second core so that the third and the second mode radiation component are polarized orthogonally along the fast and the slow axis respectively.

15. A computer program product adapted to control optical measurement system, **characterized in that** it contains a set of instructions for a processing unit (**150, 850, 1250**) of the optical measurement system

as defined in any of claims 10 to 14,
the set of instructions when executed by the processing unit processing unit (**150, 850, 1250**) causes optical measurement system to execute a method as defined in any of claims 1 to 9.

Fig. 1

**Fig. 2**

**Fig. 3**

**Fig. 4**

**Fig. 5**

**Fig. 6**

**Fig. 7**

**Fig. 8**

Fig. 9

Fig. 10

Fig. 11

Fig. 12

Europäisches
Patentamt

European
Patent Office

Office européen
des brevets

# EUROPEAN SEARCH REPORT

Application Number

EP 21 46 1606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/042507 A1 (ECOLE POLYTECH [CH]; UNIV DE ALCALÁ [ES]) 24 March 2016 (2016-03-24) * page 3, line 5 - line 15 * * page 6, line 5 - page 7, line 27; figure 11 * | 1-15 | INV. G01D5/353 G01L1/24 G01L11/02 |
| A | US 2012/067118 A1 (HARTOG ARTHUR [GB] ET AL) 22 March 2012 (2012-03-22) * paragraphs [0002], [0003], [0071], [0072] * | 1-15 | |
| A | US 9 772 238 B2 (ADELOS INC [US]) 26 September 2017 (2017-09-26) * column 56, line 4 - line 60 * | 1-15 | |

TECHNICAL FIELDS
SEARCHED        (IPC)

E21B
G01B
G01D
G01H
G01K
G01L
G01M
G02B

The present search report has been drawn up for all claims

| Place of search | Date of completion of the search | Examiner |
|---|---|---|
| The Hague | 13 May 2022 | Keita, Mamadou |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 46 1606

13-05-2022

| Patent document cited in search report | | Publication date | Patent family member(s) | | Publication date |
|---|---|---|---|---|---|
| WO  2016042507 | A1 | 24-03-2016 | EP | 3194923 A1 | 26-07-2017 |
| | | | US | 2017307474 A1 | 26-10-2017 |
| | | | WO | 2016042507 A1 | 24-03-2016 |
| US 2012067118 | A1 | 22-03-2012 | CA | 2809660 A1 | 08-03-2012 |
| | | | EP | 2596387 A2 | 29-05-2013 |
| | | | US | 2012067118 A1 | 22-03-2012 |
| | | | WO | 2012030814 A2 | 08-03-2012 |
| US 9772238 | B2 | 26-09-2017 | US | 2016187223 A1 | 30-06-2016 |
| | | | US | 2016191163 A1 | 30-06-2016 |
| | | | US | 2016252414 A1 | 01-09-2016 |
| | | | US | 2019219478 A1 | 18-07-2019 |
| | | | US | 2020326260 A1 | 15-10-2020 |
| | | | WO | 2016033192 A1 | 03-03-2016 |
| | | | WO | 2016033199 A1 | 03-03-2016 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017093588 A
- EP 3194923 A1

- WO 2017002460 A1

### Non-patent literature cited in the description

- **XIN LU.** Coherent Rayleigh time domain reflectometry: novel applications for optical fibre sensing. *EPFL,* 2016, https://infoscience.epfl.ch/record/221427
- **LI, ZHANG et al.** Analysis and Reduction of Large Errors in Rayleigh-based Distributed Sensor. *J. Light. Technol.,* vol. 37, 4710-4719
- **LIEHR, SASCHA et al.** Real-time dynamic strain sensing in optical fibers using artificial neural networks. *Optics Express,* 2019, vol. 27, 7405-7425
- **DING, ZHENYANG et al.** Distributed Optical Fibre Sensors Based on Optical Frequency Domain Reflectometry: A review. Sensors, 2018, vol. 18, 104-127
- **Y. KOYAMADA ; M. IMAHAMA ; K. KUBOTA ; K. HOGARI.** Fiber-Optic Distributed Strain and Temperature Sensing with Very High Measurand Resolution Over Long Range Using Coherent OTDR. *J. Light. Technol.,* vol. 27, 1142-1146
- **FERNÁNDEZ-RUIZ, MARIA R. ; COSTA, LUIS ; MARTINS, HUGO. ; MARCON, LEONARDO ; SOTO, MARCELO ; SORIANO-AMAT, MIGUEL ; COSTA, LUIS ; FERNÁNDEZ-RUIZ, MARIA R. ; MARTINS, HUGO ; PALMIERI, LUCA.** High-Resolution Chirped-Pulse φ-OTDR by Means of Sub-Bands Processing. *Journal of Lightwave Technology.,* 2019, 1-1
- **MARCON, LEONARDO ; SOTO, MARCELO ; SORIANO-AMAT, MIGUEL ; COSTA, LUIS ; MARTINS, HUGO ; PALMIERI, LUCA ; GONZALEZ-HERRAEZ, MIGUEL.** *Boosting the spatial resolution in chirped pulse φ-OTDR using sub-band processing,* 2019

- **R. FERNÁNDEZ-RUIZ, M. ; COSTA, L. ; F. MARTINS, H.** Distributed Acoustic Sensing Using Chirped-Pulse Phase-Sensitive OTDR Technology. *Sensors,* 2019, vol. 19, 4368
- **LUIS COSTA ; REGINA MAGALHÃES ; LUCA PALMIERI ; HUGO MARTINS ; SONIA MARTIN-LOPEZ ; MARIA R. ; FERNÁNDEZ-RUIZ ; MIGUEL GONZALEZ-HERRAEZ.** Fast and direct measurement of the linear birefringence profile in standard single-mode optical fibers. *Opt. Lett.,* 2020, vol. 45, 623-626
- **L. ZHANG ; L. D. COSTA ; Z. YANG ; M. A. SOTO ; M. GONZALEZ-HERRÁEZ ; L. THÉVENAZ.** Analysis and Reduction of Large Errors in Rayleigh-Based Distributed Sensor. *Journal of Lightwave Technology,* 15 September 2019, vol. 37 (18), 4710-4719
- **FERNÁNDEZ-RUIZ ; MARIA R. ; COSTA, LUIS ; MARTINS, HUGO.** *Coherent Optical Time Domain Reflectometry,* 2019
- Acoustic Sensing Using Chirped-Pulse Phase-Sensitive OTDR Technology. *Sensors,* vol. 19, 4368
- **X. PAN.** Enhanced FBG Temperature Sensitivity in PbS-Doped Silica Optical Fiber. *J. Light. Technol.,* 2019, vol. 37 (18), 4902-4907
- **H. M. XIE ; PH. DABKIEWICZ ; R. ULRICH ; K. OKAMOTO.** Side-hole fiber for fiber-optic pressure sensing. *Opt. Lett.,* 1986, vol. 11, 333-335